# EUROPEAN PATENT APPLICATION

(11) **EP 4 407 724 A1**
(43) Date of publication of application: **31.07.2024**
(21) Application number: 22892001.3
(22) Date of filing: 09.11.2022
(51) Int. Cl.: H01M 10/04, H01M 10/0587

(54) **CELL WINDING DEVICE AND METHOD**

(30) Priority: 09.11.2021 CN 202111321233
(71) Applicant: Contemporary Amperex Technology Co., Limited, Ningde, Fujian 352100 (CN)
(72) Inventor: XIE, Chao, Ningde, Fujian 352100 (CN); WANG, Yiruo, Ningde, Fujian 352100 (CN); LIN, Gang, Ningde, Fujian 352100 (CN); CHEN, Yaojin, Ningde, Fujian 352100 (CN)
(74) Representative: Gong, Jinping
(86) International application number: PCT/CN2022/130816
(87) International publication number: WO 2023/083207

(57) **Abstract**

Embodiments of the present disclosure relate to the field of battery technologies and disclose a cell winding device and method. The cell winding device includes a first cutting unit, a first connection unit, a winding unit, and a second cutting unit. The first cutting unit is configured to perform cutting on an electrode sheet. The first connection unit is adjacent to the first cutting unit, and configured to connect, through a connection tape, adjacent electrode sheets that have been subject to the cutting. The winding unit is configured to perform winding on the adjacent electrode sheets connected through the connection tape and drive, in response to completion of the winding, the electrode sheets that are wound to move, in such a manner that the connection tape corresponds to the second cutting unit. The second cutting unit is configured to perform cutting on the connection tape. With the above scheme, a winding efficiency for a battery cell is improved according to the embodiments of the present disclosure.

## Description

### CROSS-REFERENCE TO RELATED APPLICATION

This application claims a priority to Chinese Patent Application No. 202111321233.8, titled "CELL WINDING DEVICE AND METHOD" and filed on November 9, 2021, the entire contents of which are incorporated herein by reference.

### FIELD

Embodiments of the present disclosure relate to the field of cell winding technologies, and more particularly, to a cell winding device and a cell winding method.

### BACKGROUND

Energy saving and emission reduction is the key to the sustainable development of the automobile industry. Electric vehicles have become an important part of the sustainable development of the automobile industry due to their advantages of energy conservation and environmental protection. For electric vehicles, battery technology is an important factor for their development.

With the development of battery technology, the demand for batteries is increasing. It is becoming increasingly important to quickly and efficiently produce and manufacture batteries that meet quality requirements. It was found that the conventional battery production technology now experiences a technical bottleneck that conventional production devices generally have a low efficiency, and thus it is urgent to improve the efficiency of the production devices.

### SUMMARY

In view of the above problems, embodiments of the present disclosure provide a cell winding device and method to solve the above problems in the related art.

In an aspect, the embodiments of the present disclosure provide a cell winding device. The cell winding device includes a first cutting unit, a first connection unit, a winding unit, and a second cutting unit. The first cutting unit is configured to perform cutting on an electrode sheet. The first connection unit is adjacent to the first cutting unit, and configured to connect, through a connection tape, adjacent electrode sheets that have been subject to the cutting. The winding unit is configured to perform winding on the adjacent electrode sheets that are connected through the connection tape and drive, in response to completion of the winding, the electrode sheets that are wound to move, in such a manner that the connection tape corresponds to the second cutting unit. The second cutting unit is configured to perform cutting on the connection tape.

According to the above embodiments of the present disclosure, on the one hand, since the electrode sheets that have been subject to the cutting are connected end to end through the connection tape, new winding can be started simultaneously with a winding completion simply by cutting off the connection tape, which eliminates an action of feeding an electrode sheet, greatly improving an efficiency of electrode sheet winding, and solving problems of folding, a head offset, and a tail offset of the electrode sheet that are caused by the feeding of the electrode sheet. On the other hand, the connection tape can protect cutting positions of the electrode sheets, preventing fins of the electrode sheets that have been subject to the cutting from piercing a separator. Further, an electrode sheet winding device cuts off the electrode sheet in advance and adheres the connection tape on the electrode sheets that have been subject to the cutting, which solves a problem that when a conventional electrode sheet winding device cuts off the electrode sheet above a winding pin, the generated dust falls into a coil core.

In some embodiments, the first cutting unit includes a cutter, a cutter movement motor, and a cutter slide rail, the cutter being slidably disposed at the cutter slide rail, and the cutter movement motor being disposed at an end of the cutter slide rail and configured to drive the cutter to slide on the cutter slide rail.

In the embodiments of the present disclosure, after the cutter cuts off the electrode sheet, the cutter movement motor will drive the cutter to slide on the slide rail to move the cutter away, in such a manner that a subsequent connection operation is kept from being affected. Such a structure is simple and easy to operate.

In some embodiments, the cutter includes a stationary cutter, a movable cutter, an electrode sheet pressing plate, and a cutter motor; the electrode sheet pressing plate is opposite to the stationary cutter and configured to press the electrode sheet against the stationary cutter; and the movable cutter and the cutter motor are arranged together, the movable cutter being configured to cut off the electrode sheet when driven by the cutter motor.

With the scheme, tightly pressing the electrode sheet before the electrode sheet is cut can prevent the electrode sheet from moving during cutting, achieving a satisfying cutting result.

In some embodiments, the first cutting unit further includes a dust suction mechanism, the dust suction mechanism being adjacent to the cutter and configured to perform dust suction on the electrode sheet after the electrode sheet is cut by the cutter.

According to the embodiments of the present disclosure, a dust removal mechanism is arranged adjacent to the cutter, in such a manner that dust removal is performed simultaneously when the cutter cuts off the electrode sheet, which can prevent dust and debris from entering a battery cell to a maximum extent possible.

In some embodiments, an electrode sheet feeding unit and an electrode sheet clamping unit are included. The electrode sheet feeding unit and the electrode sheet clamping unit are movably arranged relative to each other, and are configured to clamp the electrode sheet and drive the electrode sheet that have been subject to the cutting to move. The first cutting unit is disposed between the electrode sheet feeding unit and the electrode sheet clamping unit, the first cutting unit being configured to perform the cutting on the electrode sheet when the electrode sheet is clamped by the electrode sheet feeding unit and the electrode sheet clamping unit. In response to the cutting being completed, the electrode sheet feeding unit and the electrode sheet clamping unit are moved relative to each other, in such a manner that the electrode sheets that have been subject to the cutting are spaced apart from each other by a predetermined distance.

With the electrode sheet feeding unit and the electrode sheet clamping unit, the electrode sheet can be clamped, which can prevent the electrode sheet from moving during cutting for the electrode sheet, and allow the electrode sheets that have been subject to the cutting to be easily moved to meet a requirement for a spacing distance between the electrode sheets that have been subject to the cutting.

In some embodiments, the electrode sheet feeding unit includes a feeding unit movement motor, a feeding unit movement slide rail, an electrode sheet feeding motor, and a first electrode sheet clamping plate, the electrode sheet feeding motor being connected to the first electrode sheet clamping plate and configured to clamp the electrode sheet; the electrode sheet feeding motor being slidably disposed at the feeding unit movement slide rail; and the feeding unit movement motor being disposed at an end of the feeding unit movement slide rail and configured to drive the first electrode sheet clamping plate to slide. The electrode sheet clamping unit includes a clamping unit movement motor, a clamping unit movement slide rail, an electrode sheet clamping motor, and a second electrode sheet clamping plate, the electrode sheet clamping motor being connected to the second electrode sheet clamping plate, the second electrode sheet clamping plate configured to clamp the electrode sheet; the electrode sheet clamping motor being slidably disposed at the clamping unit movement slide rail; and the clamping unit movement motor being disposed at an end of the clamping unit movement slide rail and configured to drive the second electrode sheet clamping plate to slide.

According to the embodiments of the present disclosure, the electrode sheets can be conveniently clamped and moved. In addition, the electrode sheets can be moved in two directions simultaneously, making a distance adjustment for the electrode sheets flexible.

In some embodiments, the first connection unit includes a first upper electrode sheet adhesive sticking mechanism and a first lower electrode sheet adhesive sticking mechanism, the first upper electrode sheet adhesive sticking mechanism and the first lower electrode sheet adhesive sticking mechanism being opposite to each other at two sides of an electrode sheet clamping plate, for adhering the connection tape on each of two sides of the adjacent electrode sheets that have been subject to the cutting to connect the adjacent electrode sheets that have been subject to the cutting.

Simultaneously connecting two sides of the electrode sheets that have been subject to the cutting by the first upper electrode sheet adhesive sticking mechanism and the first lower electrode sheet adhesive sticking mechanism can ensure connection strength of the electrode sheets that have been subject to the cutting, which provides a satisfying connection result.

In some embodiments, the first upper electrode sheet adhesive sticking mechanism or the first lower electrode sheet adhesive sticking mechanism includes an adhesive preparation mechanism and an adhesive sticking mechanism, the adhesive preparation mechanism being configured to dispose the connection tape at the adhesive sticking mechanism, and the adhesive sticking mechanism being configured to connect, through the connection tape, the adjacent electrode sheets that have been subject to the cutting.

With the adhesive preparation mechanism and the adhesive sticking mechanism, an efficiency of adhesive sticking can be greatly improved, and thus a winding efficiency of the battery cell can be improved.

In some embodiments, the adhesive preparation mechanism and the adhesive sticking mechanism are arranged adjacent to each other. The adhesive preparation mechanism includes an adhesive feeding motor, an adhesive feeding finger, an adhesive feeding slide rail, and an adhesive tape cutter; and the adhesive sticking mechanism includes an adhesive sticking wheel and an adhesive preparation pressing mechanism. The adhesive feeding finger is disposed at the adhesive feeding slide rail and configured to clamp the connection tape, the adhesive feeding finger being driven by the adhesive feeding motor to move an end of the connection tape to the adhesive preparation pressing mechanism along the adhesive feeding slide rail; and when the end of the connection tape is tightly pressed by the adhesive preparation pressing mechanism against the adhesive sticking wheel, the adhesive feeding finger releases the connection tape and is subjected to a position return. The adhesive preparation pressing mechanism is opposite to the adhesive sticking wheel, and configured, in such a manner that the end of the connection tape is tightly pressed against the adhesive sticking wheel when the connection tape is moved by the adhesive feeding finger to the adhesive preparation pressing mechanism. The connection tape rotates by a predetermined distance under driving of the adhesive sticking wheel. The adhesive tape cutter is configured to cut off the connection tape.

With the above embodiments, the electrode sheets can be connected by rotating, and thus a length of an adhesive tape can be conveniently and flexibly controlled based on a distance between the electrode sheets that have been subject to the cutting, which is convenient and quick, greatly improving an efficiency of connecting the electrode sheets.

In some embodiments, the adhesive sticking mechanism includes an adhesive pressing plate rotation motor, the adhesive pressing plate rotation motor being configured to drive the adhesive sticking wheel to move, in such a manner that the adhesive sticking wheel is located at the adhesive preparation mechanism or at the electrode sheet clamping plate.

With the adhesive pressing plate rotation motor, the adhesive sticking wheel can be easily moved to freely switch between adhesive preparation and adhesive sticking, which greatly improves the efficiency of connecting the electrode sheets.

In some embodiments, the adhesive preparation mechanism and the adhesive sticking mechanism are arranged adjacent to each other. The adhesive preparation mechanism includes an adhesive feeding motor, an adhesive feeding finger, an adhesive feeding slider, and an adhesive tape cutter; and the adhesive sticking mechanism includes an adhesive sticking pressing plate and an adhesive preparation pressing mechanism. The adhesive feeding finger is disposed at the adhesive feeding slider and configured to clamp the connection tape, the adhesive feeding finger being driven by the adhesive feeding motor to move the connection tape to the adhesive sticking pressing plate along the adhesive feeding slider; and when the connection tape is sticked by the adhesive sticking pressing plate, the adhesive feeding finger releases the connection tape. The adhesive sticking pressing plate is disposed at an end of the adhesive preparation pressing mechanism, and configured to stick the connection tape when the connection tape is moved by the adhesive feeding finger to the adhesive sticking pressing plate. The adhesive preparation pressing mechanism is configured to drive the adhesive sticking pressing plate to a specified position. The adhesive tape cutter is configured to cut off the connection tape.

With the scheme of a connection by the adhesive sticking pressing plate, the electrode sheets can be connected quickly, and such a structure is simple, greatly improving the efficiency of connecting the electrode sheets.

In some embodiments, the winding unit at least includes a first winding station and a second winding station. The winding unit is configured to drive, in response to the first winding station completing winding, the first winding station and the second winding station to rotate, in such a manner that the connection tape corresponds to the second cutting unit. The second cutting unit is configured to cut off the connection tape after the connection tape is clamped by the second winding station.

By cutting off the electrode sheet at the connection tape, a seamless connection of winding at different stations can be realized, which eliminates the action of feeding the electrode sheet, greatly improving the efficiency of the electrode sheet winding.

In another aspect, the embodiments of the present disclosure further provide a cell winding method. The method includes: performing the cutting on the electrode sheet; connecting, through the connection tape, the adjacent electrode sheets that have been subject to the cutting; performing the winding on the adjacent electrode sheets connected through the connection tape, and aligning the connection tape to a cutting position subsequent to a completion of the winding; and performing the cutting on the connection tape.

With the method according to the embodiments of the present disclosure, on the one hand, the connection tape can protect cutting positions of the electrode sheets, preventing fins of the electrode sheets that have been subject to the cutting from piercing a separator. On the other hand, since the electrode sheets that have been subject to the cutting are connected end to end through the connection tape, new winding can be started simultaneously with a winding completion simply by cutting off the connection tape, which eliminates an action of feeding an electrode sheet, greatly improving an efficiency of electrode sheet winding, and solving problems of folding, a head offset, and a tail offset of the electrode sheet that are caused by the feeding of the electrode sheet. Thus, an excess-length problem between a positive electrode and a negative electrode can be avoided. Further, an electrode sheet winding device cuts off the electrode sheet in advance and adheres the connection tape on the electrode sheets that have been subject to the cutting, which solves a problem that when a conventional electrode sheet winding device cuts off the electrode sheet above a winding pin, the generated dust falls into a coil core.

In some embodiments, the performing the cutting on the electrode sheet includes: moving the electrode sheet to a cutter, to perform the cutting on the electrode sheet by the cutter; and moving electrode sheets that have been subject to the cutting, in such a manner that the electrode sheets that have been subject to the cutting are spaced apart from each other by a predetermined distance.

In this way, a length of the connection tape can be easily adjusted to ensure an excess-length design of the positive electrode and the negative electrode, improving performance of a battery cell.

In some embodiments, the connecting, through the connection tape, the adjacent electrode sheets that have been subject to the cutting includes: clamping, by an electrode sheet clamping plate, the electrode sheets that have been subject to the cutting; moving an adhesive sticking wheel to the electrode sheet clamping plate, and disposing the connection tape at a surface of the adhesive sticking wheel; connecting an end of the connection tape to an end of the electrode sheets that have been subject to the cutting by an engagement between the adhesive sticking wheel and the electrode sheet clamping plate; and driving, by the electrode sheet clamping plate, the electrode sheets that have been subject to the cutting to move, and rotating the adhesive sticking wheel along with a movement of the electrode sheet clamping plate to connect another end of the connection tape to another end of the electrode sheets that have been subject to the cutting.

With the adhesive sticking wheel, the connection tape can be set regardless of a length of the connection tape. By rotating the adhesive sticking wheel, the connection tape can be set at any length, which greatly improves an efficiency and convenience of setting the connection tape.

In some embodiments, the disposing the connection tape at the surface of the adhesive sticking wheel includes: clamping, by an adhesive feeding finger, the connection tape, and moving the end of the connection tape to an adhesive preparation pressing mechanism, in such a manner that the end of the connection tape is tightly pressed against the surface of the adhesive sticking wheel by the adhesive preparation pressing mechanism; releasing, by the adhesive feeding finger, the connection tape, and performing resetting; and cutting off, by the adhesive tape cutter, the connection tape subsequent to the connection tape to rotating a predetermined distance under driving of the adhesive sticking wheel.

The connection tape is disposed at a surface of the adhesive sticking wheel by means of the adhesive feeding finger. The adhesive sticking wheel is rotated. The connection tape is cut when a desired length is reached, greatly improving an efficiency of preparing the connection tape for the adhesive sticking wheel.

In some embodiments, the connecting, through the connection tape, the adjacent electrode sheets that have been subject to the cutting includes: clamping, by an electrode sheet clamping plate, the electrode sheets that have been subject to the cutting; moving an adhesive sticking pressing plate to the electrode sheet clamping plate, and sticking the connection tape to a surface of the adhesive sticking pressing plate; and moving the adhesive sticking pressing plate to connect two ends of the connection tape to the electrode sheets that have been subject to the cutting, respectively.

In this way, the connection tape is directly sticked to the surface of the adhesive sticking pressing plate. The connection tape is driven by the adhesive sticking pressing plate to directly connect the adjacent electrode sheets that have been subject to the cutting. This way can connect the electrode sheets quickly and has a simple structure, which greatly improve the efficiency of connecting the electrode sheets.

In some embodiments, the sticking the connection tape to the surface of the adhesive sticking pressing plate includes: clamping, by an adhesive feeding finger, the connection tape, and moving the connection tape to the adhesive sticking pressing plate; and releasing, by the adhesive feeding finger, the connection tape subsequent to a sticking of the connection tape to the adhesive sticking pressing plate, and cutting off, by an adhesive tape cutter, the connection tape.

In this way, the connection tape can be quickly set at the surface of the adhesive sticking pressing plate, and a simple structure can be realized, which greatly improve an efficiency of preparing the connection tape.

In some embodiments, the performing cutting on the connection tape includes: moving a second winding station subsequent to a completion of winding by the first winding station; and cutting off, by a cutting unit, the connection tape, subsequent to clamping of the connection tape by the second winding station.

In this way, a seamless connection of winding at different stations can be realized, which eliminates the action of feeding the electrode sheet, greatly improving the efficiency of the electrode sheet winding.

In some embodiments, cell winding is continued by the second winding station. By setting the connection tape between the electrode sheets, a seamless connection can be realized between different winding stations, which greatly improves an efficiency of cell winding.

With the cell winding device and the cell winding method according to the embodiments of the present disclosure, the electrode sheets that have been subject to the cutting are connected through the connection tape, which eliminates the action of feeding an electrode sheet, greatly improving the efficiency of the electrode sheet winding, and solving the problems of the folding, the head offset, and the tail offset of the electrode sheet that are caused by the feeding of the electrode sheet. Thus, an excess-length design of the head and the tail of the electrode sheet can be better realized. The connection tape can further protect the cutting positions of the electrode sheets, which solves a problem that fins of the electrode sheets that have been subject to the cutting are likely to pierce the separator. In addition, the electrode sheet winding device cuts off the electrode sheet in advance and adheres the connection tape on the electrode sheets that have been subject to the cutting, which solves the problem that when a conventional electrode sheet winding device cuts off the electrode sheet above a winding pin, the generated dust falls into a coil core, greatly improving the efficiency of cell winding and improving performance of the battery cell.

The above description is merely an overview of the technical solutions of the present disclosure. To facilitate a clear understanding of technical means of the present disclosure to implement the technical solutions in accordance with the contents of the specification, and to clarify and explain the above and other objects, features, and advantages of the present disclosure, specific embodiments of the present disclosure will be described below.

### BRIEF DESCRIPTION OF THE DRAWINGS

Various other advantages and benefits will become apparent to those skilled in the art after reading the detailed description of embodiments given below. The accompanying drawings are used for a purpose of illustrating the embodiments only, rather than limiting the present disclosure. In addition, same elements are denoted by same reference numerals throughout the accompanying drawings. In the accompanying drawings:
FIG. 1 illustrates a schematic diagram of a cell winding device according to an embodiment of the present disclosure.
FIG. 2 illustrates a diagram of an overall structure of a cell winding device according to an embodiment of the present disclosure.
FIG. 3 illustrates a schematic diagram of performing cutting on an electrode sheet by a cell winding device according to an embodiment of the present disclosure.
FIG. 4 illustrates a schematic diagram of connecting electrode sheets by a cell winding device according to an embodiment of the present disclosure.
FIG. 5 illustrates a schematic diagram of performing cutting on an electrode sheet by a cell winding device according to another embodiment of the present disclosure.
FIG. 6 illustrates a schematic diagram of connecting electrode sheets by a cell winding device according to an embodiment of the present disclosure.
FIG. 7 illustrates a schematic diagram of connecting electrode sheets by a winding unit according to an embodiment of the present disclosure.
FIG. 8 illustrates a schematic diagram of performing cutting on an electrode sheet by a winding unit according to an embodiment of the present disclosure.
FIG. 9 illustrates a schematic diagram of a structure of a wound cell according to an embodiment of the present disclosure.
FIG. 10 illustrates a flowchart of a cell winding method according to an embodiment of the present disclosure.

Reference numerals of the accompanying drawings in specific embodiments are as follows:
first electrode sheet winding branch 1-1, second electrode sheet winding branch 1-2, lower separator winding branch 1-3, upper separator winding branch 1-4;
separator unwinding and correction unit 3-1, separator tension buffer unit 3-2;
electrode sheet unwinding and correction unit 1, winding preparation unit 2, automatic winding change unit 3, tension buffer unit 4, first correction unit 5;
electrode sheet feeding unit 6, feeding unit movement motor 601, feeding unit movement slide rail 602, electrode sheet feeding motor 603, first electrode sheet clamping plate 604;
first cutting unit 7, cutter movement motor 701, cutter slide rail 702, cutter 703, stationary cutter 7031, movable cutter 7032, electrode sheet pressing plate 7033, cutter motor 7034, dust suction mechanism 704;
first connection unit 8, first upper electrode sheet adhesive sticking mechanism 81, first lower electrode sheet adhesive sticking mechanism 82, adhesive preparation mechanism 810, first roller 811, second roller 812, connection tape 813, adhesive tape roll 814, adhesive tape cutter 821, adhesive feeding slide rail 822, adhesive feeding finger 823, adhesive feeding motor 824, adhesive sticking mechanism 830, adhesive sticking wheel 831, adhesive preparation pressing mechanism 832, adhesive pressing plate rotation motor 833; second upper electrode sheet adhesive sticking mechanism 84, second lower electrode sheet adhesive sticking mechanism 85, adhesive preparation mechanism 840, first roller 841, second roller 842, connection tape 843, adhesive tape roll 844, adhesive tape cutter 851, adhesive feeding slide rail 852, adhesive feeding finger 853, adhesive feeding motor 854, adhesive pressing mechanism 855, adhesive sticking mechanism 860, adhesive sticking pressing plate 861, adhesive preparation pressing mechanism 862;
electrode sheet clamping unit 9, clamping unit movement motor 901, clamping unit movement slide rail 902, electrode sheet clamping motor 903, second electrode sheet clamping plate 904;
second correction unit 10, main electrode sheet drive unit 11, tension unit 12;
winding unit 13, first winding station 1301, second winding station 1302, winding pin 13021, third winding station 1303, winding shaft 1304, cutting pad 1305;
second cutting unit 14, cutter 1401, positioning wheel 1402, cutter motor 1403;
separator finishing and smoothing unit 15, smoothing motor 1501, smoothing wheel 1502, adhesive preparation unit 16.

### DETAILED DESCRIPTION

Embodiments of technical solutions of the present disclosure will be described in detail below with reference to the accompanying drawings. The following embodiments are only used to explain the technical solutions of the present disclosure more clearly, and therefore should be construed as examples only, rather than limitations of the protection scope of the present disclosure.

Unless otherwise defined, all technical and scientific terms used herein have the same meaning as commonly understood by those skilled in the art of the present disclosure. Terms in the present disclosure herein are only used for the purpose of describing specific embodiments, and are not intended to limit the present disclosure. Terms "including", "having", and any variations thereof in the specification, claims, and accompanying drawings of the present disclosure are intended to cover non-exclusive inclusions.

In the description of the embodiments of the present disclosure, the technical terms "first", "second", etc. are used to distinguish different objects, and cannot be understood as indicating or implying relative importance or implicitly specifying a number, a particular order, or a primary or secondary relationship of the indicated technical features. In the description of the embodiments of the present disclosure, "plurality" means at least two, unless otherwise specifically defined.

In the present disclosure, reference to "embodiment" means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

In the description of the embodiments of the present disclosure, the term "and/or" only represents a relationship between correlated objects, including three relationships. For example, "A and/or B" may mean three situations: A, B, or both A and B. In addition, the character "/" in the present disclosure generally represents an "or" relationship between the correlated objects preceding and succeeding the symbol.

In the description of the embodiments of the present disclosure, the term "plurality" refers to more than two (including two). Similarly, "plurality of groups" refers to more than two groups (including two groups), and "plurality of pieces" refers to more than two pieces (including two pieces).

In the description of the embodiments of the present disclosure, the orientation or the position indicated by technical terms such as "center", "longitudinal", "lateral", "length", "width", "thickness", "over", "below", "front", "rear", "left", "right", "vertical", "horizontal", "top", "bottom", "inner", "outer", "clockwise", "anti-clockwise", "axial", "radial", and "circumferential" should be construed to refer to the orientation and the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the embodiments of the present disclosure.

In the description of the embodiments of the present disclosure, unless otherwise clearly specified and limited, technical terms such as "install", "connect", "connect to", "fix" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the embodiments of the present disclosure can be understood according to specific circumstances.

At present, from the perspective of the development of the market, the application of batteries is more and more extensive. Batteries are not only applied to energy storage power systems such as hydro power stations, thermal power stations, wind power stations, and solar power stations, but also widely applied to electric means of transportation such as electric bicycles, electric motorcycles, and electric vehicles, and fields such as military equipment and aerospace. With a continuous expansion of the application field of batteries, a market demand for the batteries is also increasing.

With the development of battery technology, the demand for batteries is increasing. It is becoming increasingly important to quickly and efficiently produce and manufacture batteries that meet quality requirements. The conventional battery production technology now experiences a technical bottleneck that conventional production devices generally have a low efficiency, and thus it is urgent to improve the efficiency of the production devices.

Currently, a battery cell mainly includes a housing and a cell assembly disposed in the housing. The housing is an assembly that forms an internal environment of the battery cell. The formed internal environment can be configured to accommodate the cell assembly, an electrolyte, and other members.

The cell assembly is a member, in the battery cell, where an electrochemical reaction occurs. One or more cell assemblies may be included in the housing. The cell assembly is formed primarily by winding or stacking a positive electrode sheet and a negative electrode sheet. Typically, a separator is located between the positive electrode sheet and the negative electrode sheet. Parts of the positive electrode sheet and the negative electrode sheet that contain active substances form a main body portion of the cell assembly. Parts of the positive electrode sheet and the negative electrode sheet that contain no active substances each form a tab. A positive tab and a negative tab may be both located at one end of the main body portion, or may be located at two ends of the main body portion 100, respectively. During formation of the cell assembly, when winding or stacking of the positive electrode sheet, the negative electrode sheet, and the separator is completed, the electrolyte needs to be injected into the cell assembly. The wound cell assembly fully absorbs the injected electrolyte, and thus the cell assembly and the electrolyte can be fully mixed to achieve an optimal infiltration effect. During charging and discharging of a battery, positive active substances and negative active substances are reacted with the electrolyte. The tab is connected to an electrode terminal to form a current circuit.

During the formation of the cell assembly, the winding or the stacking of the positive electrode sheet, the negative electrode sheet, and the separator is a very important part of a cell assembly manufacturing process, and thus a winding efficiency of the cell assembly has a serious impact on a production efficiency of the battery. At present, to improve an efficiency of cell winding, usually a plurality of winding stations is added to increase a winding efficiency of a device. Winding of a battery cell is performed by feeding, by means of a feeding mechanism, an electrode sheet to a winding pin for winding the electrode sheet. A cell winding device still has a low efficiency in winding a single battery cell. On the other hand, at present, when the battery cell is wound, the separator needs to be pre-wound by the winding pin to bring in the positive electrode sheet and the negative electrode sheet. In this way, to avoid a leakage of metal from the positive electrode sheet and the negative electrode sheet, a few more rolls of separator is usually wound, which brings more than 1.5 turns of redundant separators to an inner loop of separators. In addition, more than 1.5 turns of redundant separators also need to be wound at the end of the battery cell to isolate the positive electrode sheet from the negative electrode sheet. Thirdly, a head of the electrode sheet is in a free state when the winding pin pre-winds the separator and drives the electrode sheet to be wound and when the electrode sheet is cut for finishing the winding of the battery cell, which easily cause problems of folding and an offset of the electrode sheet when feeding the electrode sheet. Fourthly, to improve performance of the battery cell, the negative electrode sheet usually adopts an excess-length design. "Excess-length" refers to a part of the negative electrode sheet that exceeds the positive electrode sheet in a width direction and a length direction. The excess-length design can significantly improve the performance of the battery cell. In a conventional cell winding method, since the head of the electrode sheet is in the free state when the electrode sheet is wound and the electrode sheet is also in the free state when finishing the winding of the electrode sheet, it is likely to cause a bad excess-length design in both the head and the tail of the electrode sheet, which compromises the performance of the battery cell.

With the electrode sheet winding device and the electrode sheet winding method according to the embodiments of the present disclosure, a first cutting unit, a first connection unit, a winding unit, and a second cutting unit are disposed in the electrode sheet winding device. The units cooperate with each other to cut off the electrode sheet and connect the electrode sheets that have been subject to the cutting by different lengths of connection tapes. The electrode sheets that have been subject to the cutting are connected end to end through the connection tapes and wound along with the separator. When the battery cell reaches a finishing length, the separator and the connection tapes are cut by the second cutting unit simultaneously. Therefore, the winding of the battery cell is completed. Since the electrode sheets that have been subject to the cutting are connected through the connection tapes, a new station continues to wind the battery cell while the winding unit completes the winding the wound battery cell, which eliminates an action of feeding the electrode sheet, greatly improving an efficiency of electrode sheet winding. In addition, the electrode sheets that have been subject to the cutting are connected end to end through the connection tapes, and cut only after the electrode sheets that have been subject to the cutting directly enter the winding pin to be wound tightly, which completely solves problems of folding, a head offset, and a tail offset of the electrode sheet that are caused by the feeding of the electrode sheet, better realizing the excess-length design of the head and the tail of the electrode sheet. In addition, the electrode sheet winding device cuts off the electrode sheet in advance and adheres the connection tape on the electrode sheets that have been subject to the cutting, which solves a problem that when a conventional electrode sheet winding device cuts off the electrode sheet above a winding pin, the generated dust falls into a coil core. Further, the connection tape that can protect a cutting position of each electrode sheet is adhered on the cutting position of each electrode sheet, which solves a problem that fins of the electrode sheets that have been subject to the cutting are likely to pierce the separator.

The electrode sheet winding device according to the embodiments of the present disclosure can be applied in winding of battery cells of various shapes, such as a square shape, a round shape, or other shapes. The embodiments of the present disclosure are not limited to any of these examples.

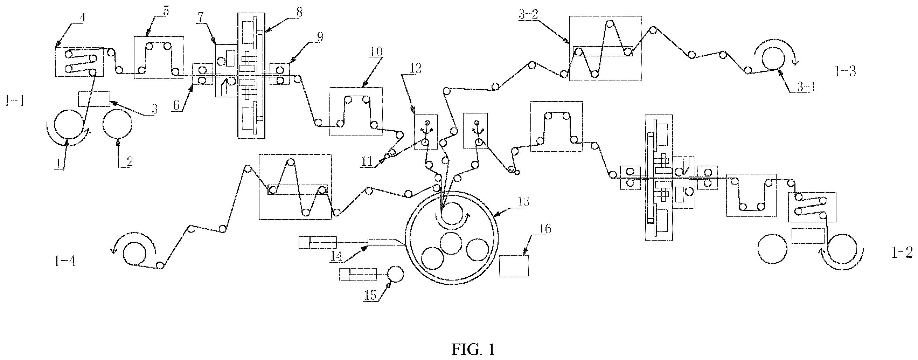

FIG. 1 illustrates a schematic diagram of an application scenario of a battery cell winding device according to an embodiment of the present disclosure. The cell winding device has a main function of winding an upper separator, an electrode sheet, a lower separator, and an electrode sheet to form a battery cell, and includes an upper separator winding branch 1-4, a first electrode sheet winding branch 1-1, a lower separator winding branch 1-3, and a second electrode sheet winding branch 1-2.

In FIG. 1, to realize winding of the battery cell, an upper separator, a first electrode sheet, a lower separator, and a second electrode sheet are wound together. The first electrode sheet and the second electrode sheet each are a positive electrode sheet or a negative electrode sheet, which usually adopt a same winding process and a same winding device. The upper separator and the lower separator are a separator disposed between an outermost layer of the battery cell and the first electrode sheet and a separator disposed between the outermost layer of the battery cell and the second electrode sheet, respectively, which also usually adopt a same winding process and a same winding device. In this embodiment, for ease of description, the upper separator winding branch 1-4 and the lower separator winding branch 1-3 are collectively referred to as a separator winding branch, and the first electrode sheet winding branch 1-1 and the second electrode sheet winding branch 1-2 are collectively referred to as an electrode sheet winding branch. The description is made with one of the upper separator winding branch 1-4 and the lower separator winding branch 1-3 and one of the first electrode sheet winding branch 1-1 and the second electrode sheet winding branch 1-2.

As illustrated in FIG. 1, the separator winding branch includes a separator unwinding and correction unit 3-1, one or more conveyor rollers, and a separator tension buffer unit 3-2. The separator unwinding and correction unit 3-1 is configured to unwind the separator and correct unwinding of the separator during the unwinding of the separator, to avoid a problem of uneven winding of the separator due to an offset of the separator. The separator tension buffer unit 3-2 is configured to relieve tension of the separator, to avoid separator breakage due to excessive tension of the separator. The conveyor roller is configured to convey the separator during winding of the separator. Of course, the separator winding branch may further include another device configured to intervene in the winding of the separator to ensure an efficiency and effectiveness of the winding of the separator, and thus details thereof which will be omitted here. The upper separator winding branch 1-4 and the lower separator winding branch 1-3 are generally of a same structure and each are disposed between the first electrode sheet winding branch 1-1 and the second electrode sheet winding branch 1-2.

The electrode sheet winding branch includes an electrode sheet unwinding and correction unit 1, a winding preparation unit 2, an automatic winding change unit 3, a tension buffer unit 4, a first correction unit 5, an electrode sheet feeding unit 6, a first cutting unit 7, a first connection unit 8, an electrode sheet clamping unit 9, a second correction unit 10, a main electrode sheet drive unit 11, and a tension unit 12. The electrode sheet passes through the above units sequentially. The above units are configured to perform different processing on the electrode sheet to prepare the electrode sheet for winding before the winding of the electrode sheet.

The electrode sheet unwinding and correction unit 1 is configured to unwind the electrode sheet and to correct unwinding of the electrode sheet during the unwinding of the electrode sheet, to avoid failures of cutting and winding of the electrode sheet caused by an offset of the electrode sheet.

The winding preparation unit 2 is arranged adj acent to the electrode sheet unwinding and correction unit 1, and is configured to automatically provide a standby electrode sheet material.

The automatic winding change unit 3 is arranged adjacent to the electrode sheet unwinding and correction unit 1 and the winding preparation unit 2, and is configured to automatically dispose the standby electrode sheet at the electrode sheet unwinding and correction unit 1 when the electrode sheet disposed at the electrode sheet unwinding and correction unit 1 is exhausted, which improves the efficiency of the electrode sheet winding.

The tension buffer unit 4 is configured to relieve the tension of the electrode sheet, to avoid separator breakage due to excessive tension of the separator.

The first correction unit 5 is configured to correct the electrode sheet. The winding of the electrode sheet is demanding since requirements are imposed on an entry angle and a wound length of the electrode sheet, fins of a cut edge, or the like. To ensure performance of the electrode sheet winding, the electrode sheet needs to be corrected before performing cutting on the electrode sheet, to ensure that an offset value of an angle at which the electrode sheet enters the cutting unit is smaller than a predetermined error.

The electrode sheet feeding unit 6 is configured to feed the corrected electrode sheet into the first cutting unit 7 to ensure a cutting position of the electrode sheet and a distance between adjacent electrode sheets that have been subject to the cutting, facilitating accurately correcting, by the first connection unit 8, the electrode sheets that have been subject to the cutting.

The first cutting unit 7 is configured to cut off the electrode sheet fed by the electrode sheet feeding unit 6, and to clean up debris and dust generated after the electrode sheet is cut, to prevent the leftover debris or dust from being sticked to the electrode sheet and wound along with the separator, which prevents the leftover debris or dust from entering the battery cell and compromising performance of a battery.

The first connection unit 8 is configured to connect adjacent electrode sheets that have been subject to the cutting, which may be connected in various ways. For example, the adjacent electrode sheets that have been subject to the cutting may be connected by the way of adhering an adhesive tape on the adjacent electrode sheets that have been subject to the cutting, or by the way of clamping the front and back of the adjacent electrode sheets that have been subject to the cutting or welding.

The electrode sheet clamping unit 9 is configured to clamp the electrode sheet to facilitate cutting, by the first cutting unit 7, the electrode sheet and connecting, by the first connection unit 8, the electrode sheets that have been subject to the cutting. An action to cut off the electrode sheet and an action to connect the electrode sheets are interrelated. The first cutting unit 7, the first connection unit 8, and the electrode sheet clamping unit 9 need to cooperate with each other to ensure that the electrode sheets are connected smoothly.

The second correction unit 10 is configured to re-correct the electrode sheet that is cut and reconnected through the connection tape, to ensure that the electrode sheet remains on an original winding track.

The main electrode sheet drive unit 11 is configured to provide power to feeding of the electrode sheet, to ensure power for conveying the electrode sheet.

The tension unit 12 is configured to provide tension to the electrode sheet before the electrode sheet is wound, to ensure a winding density of the electrode sheet.

It should be noted that in the above-mentioned electrode sheet winding branch, the device may be adjusted or added based on a demand of the electrode sheet winding of the battery cell. The above description is only an example of a device composition of the electrode sheet winding branch, and does not constitute a limitation on the protection scope of the embodiments of the present disclosure.

After the above-mentioned separator winding branch and electrode sheet winding branch are ready for winding, the winding of the electrode sheet and the winding of the separator are carried out by a cell winding branch. Reference is made to FIG. 1 again.

The cell winding branch includes a winding unit 13, a second cutting unit 14, a separator finishing and smoothing unit 15, and an adhesive preparation unit 16, etc., which are mainly configured to wind and rewind the electrode sheet and the separator.

The electrode sheet winding branch and the separator winding branch convey the prepared electrode sheet and the separator to the winding device in accordance with a layering requirement. The winding device clamps, by means of the winding pin, the electrode sheet and the separator after layering of the electrode sheet and the separator, and then rotates to wind the electrode sheet and the separator. In response to completion of the winding, the wound battery cell is rotated to a lower station through a winding station adjustment, and new winding is performed at an upper station, which can greatly improve a winding efficiency of the battery cell.

The second cutting unit 14 is configured to cut off the electrode sheet and the separator at a position of the connection tape to start a new winding action after a station switch is performed by the winding unit 13.

The separator finishing and smoothing unit 15 is configured to wind and arrange the electrode sheets that have been subject to the cutting after the winding unit 13 completes the winding of the battery cell.

The adhesive preparation mechanism is configured to complete an adhesive sticking at a finishing position of the battery cell, and adhere a protective adhesive on a surface of the wound battery cell to protect the wound battery cell.

It should be noted that in the above-mentioned cell winding branch, the device may be adjusted or added based on a demand of the electrode sheet winding of the battery cell. The above description is only an example of a device composition of the cell winding branch, and does not constitute a limitation on the protection scope of the embodiments of the present disclosure.

After the winding of the battery cell is completed, the battery cell may also be pressed by a cell pre-pressing mechanism to form a bare cell. The bare cell is conveyed to a next link by a bare cell feeding and transportation mechanism to continue production and assembly of the battery.

The cell winding device according to the embodiments of the present disclosure is applied in the above-mentioned scenarios. The electrode sheet is cut and connected through the connection tape. On the one hand, the action of feeding the electrode sheet is eliminated to avoid the problems of the folding, the head offset, and the tail offset of the electrode sheet, which greatly improves the efficiency of the cell winding, improving the performance of the battery cell. On the other hand, an excess-length design of a negative electrode and a positive electrode can be better realized to avoid a waste of the separator. Further, a cut part of the electrode sheet is protected, which avoids the problem of piercing the separator brought about by the fins of the electrode sheet and the problem that the dust or the debris falls into the coil core.

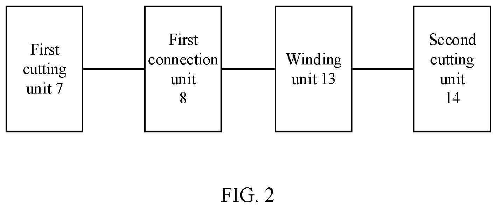

Specifically, a schematic diagram of a structure of the cell winding device according to an embodiment of the present disclosure is illustrated in FIG. 2. The cell winding device includes the first cutting unit 7, the first connection unit 8, the winding unit 13, and the second cutting unit 14. The first cutting unit 7 is configured to perform cutting on an electrode sheet. The first connection unit 8 is adjacent to the first cutting unit 7, and configured to connect, through a connection tape, adjacent electrode sheets that have been subject to the cutting. The winding unit 13 is configured to perform winding on the adjacent electrode sheets connected through the connection tape and drive, after the winding is completed, the electrode sheets that are wound to move, in such a manner that the connection tape corresponds to the second cutting unit 14. The second cutting unit 14 is configured to perform cutting on the connection tape.

The first cutting unit 7 is configured to perform cutting on the electrode sheet conveyed to the first cutting unit 7. To ensure a cutting result for the electrode sheet, the first cutting unit 7 may perform the cutting in a variety of ways. For example, the cutting may be performed by means of a cutter, laser light, or the like. The present disclosure is not specifically limited to any of these examples.

To facilitate a connection of the electrode sheets that have been subject to the cutting, the first connection unit 8 and the first cutting unit 7 are arranged adjacent to each other. After the first cutting unit 7 performs the cutting on the electrode sheet, the electrode sheets that have been subject to the cutting are moved away from each other by a predetermined distance. The adjacent electrode sheets that have been subject to the cutting are connected by the first connection unit 8 by means of the connection tape. Various forms may be adopted for the connection tape. For example, an adhesive tape is adopted to adhesively connect two adjacent electrode sheets, or welding, clamping, or the like is adopted to connect the two adjacent electrode sheets. Different batteries have different requirements for battery cells, and thus a length of the connection tape varies. That is, a spacing between the adjacent electrode sheets that have been subject to the cutting is variable. The length of the connection tape includes lengths of parts of the connection tape connected to adjacent electrode sheets that have been subject to the cutting and a length of a spacing between the adjacent electrode sheets that have been subject to the cutting, when the connection tape is connected to the adjacent electrode sheets that have been subject to the cutting. The lengths of the parts of the connection tape connected to the adjacent electrode sheets that have been subject to the cutting may be set freely as desired. Typically, each of the parts of the connection tape connected to the adjacent electrode sheets that have been subject to the cutting is set to a long length when a strong connection is needed. The length between the adjacent electrode sheets that have been subject to the cutting is related to a wrapping strategy for the positive electrode sheet and the negative electrode sheet during the winding of the battery cell. By controlling the length of the connection tape between the electrode sheets, an excess-length arrangement between the positive electrode sheet and the negative electrode sheet at an inner side and an outer side of the battery cell can be controlled to avoid redundant separators during the winding, which greatly saves separators for an innermost loop and an outermost loop.

The winding unit 13 may include one or more winding stations. Each winding station is configured to independently wind the electrode sheet and the separator. When one winding station completes winding, the one winding station may be switched to another winding station for winding, which improves the efficiency of the cell winding. In the embodiments of the present disclosure, after the electrode sheets and the separator are clamped at one winding station, the electrode sheets connected through the connection tape are wound. When winding is completed at the one winding station, the winding unit 13 drives the wound battery cell to move, in such a manner that the connection tape corresponds to the second cutting unit 14, and simultaneously to enable another winding unit to clamp the electrode sheets and the separator. Since the adjacent electrode sheets that have been subject to the cutting are connected through the connection tape when the winding unit 13 performs the winding, the connection tape may be located at a position corresponding to second cutting unit 14 after the winding is completed, which allows the second cutting unit 14 to cut off the connection tape.

The second cutting unit 14 is configured to perform cutting on the connection tape. To ensure the cutting result for the electrode sheet, the second cutting unit 14 may perform cutting in a variety of ways. For example, the cutting may be performed by means of a cutter, laser light, or the like. The present disclosure is not specifically limited to any of these examples.

After the first cutting unit 7 cuts off the electrode sheet, the first connection unit 8 connects the electrode sheets that have been subject to the cutting end to end through the connection tape. The electrode sheets connected through the connection tape enters the winding unit 13 to be wound with the separator. After the winding is completed, the second cutting unit 14 cuts off the connection tape to form the wound battery cell. On the one hand, since the electrode sheets that have been subject to the cutting are connected end to end through the connection tape, new winding can be started simultaneously with a winding completion simply by cutting off the connection tape, which eliminates the action of feeding the electrode sheet, greatly improving the efficiency of the electrode sheet winding, and solving the problems of the folding, the head offset, and the tail offset of the electrode sheet that are caused by the feeding of the electrode sheet. On the other hand, the connection tape can protect cutting positions of the electrode sheets, preventing fins of the electrode sheets that have been subject to the cutting from piercing the separator. Further, the electrode sheet winding device cuts off the electrode sheet in advance and adheres the connection tape on the electrode sheets that have been subject to the cutting, which solves the problem that when a conventional electrode sheet winding device cuts off the electrode sheet above a winding pin, the generated dust falls into a coil core.

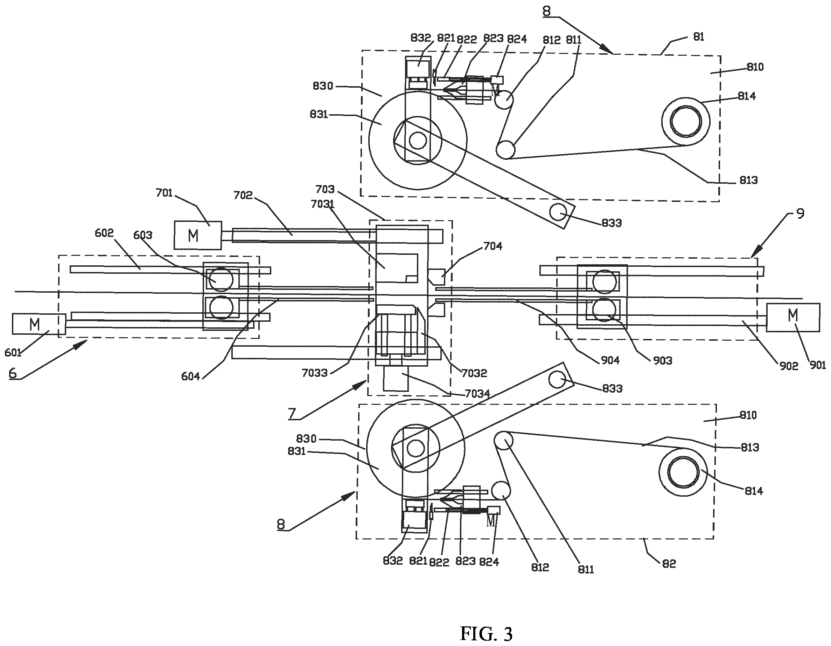

FIG. 3 illustrates a schematic diagram of performing cutting on the electrode sheet by the cell winding device according to an embodiment of the present disclosure. As illustrated in FIG. 3, to improve a cutting efficiency for the electrode sheet, the cell winding device includes the electrode sheet feeding unit 6, the first cutting unit 7, the first connection unit 8, and the electrode sheet clamping unit 9. The electrode sheet feeding unit 6 is configured to convey the electrode sheet to the first cutting unit 7, and clamp the electrode sheet together with an electrode sheet clamping mechanism. The first cutting unit 7 is configured to move to a side after cutting off the electrode sheet. After the electrode sheet clamping unit 9 drives the electrode sheets that have been subject to the cutting to move to a side away from the electrode sheet feeding unit 6 by a predetermined distance, the first connection unit 8 connects the adjacent electrode sheets that have been subject to the cutting through the connection tape, and thus the electrode sheets that have been subject to the cutting are connected to each other.

In some embodiments, as illustrated in FIG. 3, the first cutting unit 7 according to the embodiments of the present disclosure includes a cutter 703, a cutter movement motor 701, and a cutter slide rail 702. The cutter is slidably disposed at the cutter slide rail 702. The cutter movement motor 701 is disposed at an end of the cutter slide rail 702 and configured to drive the cutter to slide on the cutter slide rail 702.

The first cutting unit 7 is configured to cut off the electrode sheet by means of the cutter 703. The cutter 703 is disposed at an end of the cutter slide rail 702. The cutter movement motor 701 is disposed at another end of the cutter slide rail 702. After the first cutting unit 7 cuts off the electrode sheet, the first connection unit 8 needs to connect the electrode sheets that have been subject to the cutting. Therefore, in the embodiments of the present disclosure, after the cutter 703 cuts off the electrode sheet, the cutter movement motor 701 drives the cutter 703 to slide on the slide rail, in such a manner that the cutter 703 is moved away, which prevents the cutter 703 from affecting subsequent connection operations. Such a structure is simple and easy to operate.

In some embodiments, further referring to FIG. 3, the cutter 703 includes a stationary cutter 7031, a movable cutter 7032, an electrode sheet pressing plate 7033, and a cutter motor 7034. The electrode sheet pressing plate 7033 is opposite to the stationary cutter 7031 and configured to press the electrode sheet against the stationary cutter 7031. The movable cutter 7032 and the cutter motor 7034 are arranged together. The movable cutter 7032 is configured to cut off the electrode sheet when driven by the cutter motor 7034.

The cutter 703 is disposed at two sides of the electrode sheet. The electrode sheet is sandwiched by the cutter 703. The stationary cutter 7031 is disposed at a side of the electrode sheet, while the movable cutter 7032 is disposed at another side of the electrode sheet. The electrode sheet pressing plate 7033 is provided at a side of the movable cutter 7032, and is configured to tightly press the electrode sheet before the cutting is performed on the electrode sheet, to prevent the electrode sheet from moving during the cutting. The cutter motor 7034 is configured to drive the movable cutter 7032 to move relative to the stationary cutter 7031.

When the cutting is performed on the electrode sheet, the electrode sheet pressing plate 7033 moves towards the electrode sheet, in such a manner that the electrode sheet is tightly pressed against a surface of the stationary cutter 7031. The movable cutter 7032 is driven by the cutter motor 7034 to move, and is configured to cut off the electrode sheet with the cooperation of the stationary cutter 7031. When the cutting is completed, the movable cutter 7032 is driven by the cutter motor 7034 to move back to an original position, and the electrode sheet pressing plate 7033 and the stationary cutter 7031 are moved away from each other to two sides to release the electrode sheets that have been subject to the cutting.

In this way, before the electrode sheet is cut, tightly pressing the electrode sheet can prevent the electrode sheet from moving during the cutting, which can achieve a satisfying cutting result.

In some embodiments, the first cutting unit 7 further includes a dust suction mechanism 704. The dust suction mechanism 704 is adjacent to the cutter 703 and configured to perform dust suction on the electrode sheet after the electrode sheet is cut by the cutter.

Dust and debris will be generated during the cutting of the electrode sheet. To prevent the dust and debris from adhering to the electrode sheet and entering the battery cell along with the electrode sheet, a dust removal mechanism is adjacent to the cutter according to the embodiments of the present disclosure, in such a manner that dust removal is performed simultaneously when the cutter cuts off the electrode sheet, which can prevent the dust and debris from entering the battery cell to a maximum extent possible.

In some embodiments, the electrode sheet feeding unit 6 and the electrode sheet clamping unit 9 are movably arranged relative to each other, and are configured to clamp the electrode sheet and driving electrode sheets, that have been subject to the cutting, to move. The first cutting unit 7 is disposed between the electrode sheet feeding unit 6 and the electrode sheet clamping unit 9. The first cutting unit 7 is configured to perform the cutting on the electrode sheet when the electrode sheet is clamped by the electrode sheet feeding unit 6 and the electrode sheet clamping unit 9. When the cutting is completed, the electrode sheet feeding unit 6 and the electrode sheet clamping unit 9 are moved relative to each other, in such a manner that the electrode sheets that have been subject to the cutting are spaced apart from each other by a predetermined distance.

FIG. 1 reveals that the electrode sheet enters the electrode sheet feeding unit 6 after passing through the first correction unit 5. The electrode sheet feeding unit 6 is configured to convey the electrode sheet to the first cutting unit 7, and further configured to fix, when the electrode sheet needs to be cut, the electrode sheet to prevent the electrode sheet from moving during the cutting. The electrode sheet clamping unit 9 is movably arranged relative to the electrode sheet feeding unit 6. During feeding, the electrode sheet clamping unit 9 refrains from clamping the electrode sheet, in such a manner that the electrode sheet can smoothly pass through the electrode sheet clamping unit 9 to a next unit. When the electrode sheet needs to be cut, the electrode sheet is clamped and fixed by the electrode sheet clamping unit 9 and the electrode sheet feeding unit 6 from two ends of the electrode sheet to facilitate cutting, by the first cutting unit 7, the electrode sheet.

The first cutting unit 7 is located between the electrode sheet clamping unit 9 and the electrode sheet feeding unit 6. When clamped by the electrode sheet clamping unit 9 and the electrode sheet feeding unit 6 from the two ends of the electrode sheet, the electrode sheet is cut by the first cutting unit 7 by means of the cutter 703. After the electrode sheet is cut, the cutter movement motor 701 of the first cutting unit 7 drives the first cutting unit 7 to move to a side to expose a cut of the electrode sheet. The electrode sheet is continued to be clamped by the electrode sheet clamping unit 9 and the electrode sheet feeding unit 6. Typically, the electrode sheet clamping unit 9 is configured to drive the electrode sheets that have been subject to the cutting to move to the side away from the electrode sheet feeding unit 6 by the predetermined distance, in such a manner that the electrode sheets that have been subject to the cutting are separated. If the predetermined distance is long and moving the electrode sheet clamping unit 9 alone fails to reach the predetermined distance, likewise, the electrode sheet feeding unit 6 may be moved away from the electrode sheet clamping unit 9 to enable a distance between the electrode sheets that have been subject to the cutting to reach the predetermined distance.

With the electrode sheet feeding unit 6 and the electrode sheet clamping unit 9, the electrode sheet can be clamped, which can prevent the electrode sheet from moving during the cutting for the electrode sheet, and allow the electrode sheets that have been subject to the cutting to be easily moved to meet a requirement for a spacing distance between the electrode sheets that have been subject to the cutting.

In some embodiments, further referring to FIG. 3, the electrode sheet feeding unit 6 includes a feeding unit movement motor 601, a feeding unit movement slide rail 602, an electrode sheet feeding motor 603, and a first electrode sheet clamping plate 604. The electrode sheet feeding motor 603 is connected to the first electrode sheet clamping plate 604 and configured to clamp the electrode sheet. The electrode sheet feeding motor 603 is slidably disposed at the feeding unit movement slide rail 602. The feeding unit movement motor 601 is disposed at an end of the feeding unit movement slide rail 602 and configured to drive the first electrode sheet clamping plate 604 to slide. The electrode sheet clamping unit 9 includes a clamping unit movement motor 901, a clamping unit movement slide rail 902, an electrode sheet clamping motor 903, and a second electrode sheet clamping plate 904. The electrode sheet feeding motor 603 is connected to the second electrode sheet clamping plate 904. The second electrode sheet clamping plate 904 is configured to clamp the electrode sheet. The electrode sheet feeding motor 603 is slidably disposed at the clamping unit movement slide rail 902. The clamping unit movement motor 901 is disposed at an end of the clamping unit movement slide rail 902 and configured to drive the second electrode sheet clamping plate 904 to slide.

As illustrated in FIG. 3, an electrode sheet feeding structure includes the feeding unit movement motor 601, the feeding unit movement slide rail 602, the electrode sheet feeding motor 603, and the first electrode sheet clamping plate 604. The feeding unit movement motor 601 is disposed at the end of the feeding unit movement slide rail 602. The electrode sheet feeding motor 603 is disposed at another end of the feeding unit movement slide rail 602. The electrode sheet feeding motor 603 is further connected to the first electrode sheet clamping plate 604. During feeding of the electrode sheet, the electrode sheet is located between the electrode sheet feeding motor 603 and the first electrode sheet clamping plate 604. The first electrode sheet clamping plate 604 is in an unclamping state, while the electrode sheet feeding motor 603 drives the electrode sheet to move, in such a manner that the electrode sheet passes through the first cutting unit 7. When the electrode sheet needs to be cut, the electrode sheet feeding motor 603 stops feeding and drives the first electrode sheet clamping plate 604 to clamp the electrode sheet, to facilitate cutting off, by the first cutting unit 7, the electrode sheet. The feeding unit movement motor 601 is configured to drive the entire electrode sheet feeding motor 603 and the first electrode sheet clamping plate 604 to slide along the feeding unit movement slide rail 602, to move the electrode sheets that have been subject to the cutting.

The electrode sheet clamping unit 9 is provided at another side opposite to the electrode sheet feeding unit 6. The first cutting unit 7 is located between the electrode sheet feeding unit 6 and the electrode sheet clamping unit 9. The electrode sheet clamping unit 9 includes the clamping unit movement motor 901, the clamping unit movement slide rail 902, the electrode sheet clamping motor 903, and the second electrode sheet clamping plate 904. The electrode sheet clamping motor 903 is connected to the second electrode sheet clamping plate 904, is disposed at an end of the clamping unit movement slide rail 902, and is configured to drive the second electrode sheet clamping plate 904 to clamp the electrode sheet. The clamping unit movement motor 901 is disposed at another end of the clamping unit movement slide rail 902, and is configured to drive, when the electrode sheet needs to be moved, the entire electrode sheet clamping motor 903 and the second electrode sheet clamping plate 904 to move. In a feeding state, the second electrode sheet clamping plate 904 is in a separation state and the electrode sheet passes through a separation space in a middle of the second electrode sheet clamping plate 904. When the cutting needs to be performed on the electrode sheet, the electrode sheet clamping motor 903 drives the second electrode sheet clamping plate 904 to clamp the electrode sheet. When the cutting is completed, the clamping unit movement motor 901 operates to drive the second electrode sheet clamping plate 904 to clamp the electrode sheets that have been subject to the cutting and to move the electrode sheets that have been subject to the cutting by the predetermined distance.

When the electrode sheet needs to be cut, the electrode sheet feeding motor 603 drives the first electrode sheet clamping plate 604 to clamp the electrode sheet at a side, and the electrode sheet clamping motor 903 drives the second electrode sheet clamping plate 904 to clamp the electrode sheet at another side. The electrode sheet is cut by the first cutting unit 7 by means of the cutter 703. The electrode sheet continues to be clamped by the first electrode sheet clamping plate 604 and the second electrode sheet clamping plate 904. The electrode sheets that have been subject to the cutting are driven by the first electrode sheet clamping plate 604 and the second electrode sheet clamping plate 904 to move. Typically, when the electrode sheet is moved, the clamping unit movement motor 901 of the electrode sheet clamping unit 9 drives the electrode sheets that have been subject to the cutting to move to the side away from the electrode sheet feeding unit 6 by the predetermined distance, in such a manner that the electrode sheets that have been subject to the cutting are separated from each other. If the predetermined distance is long and moving the electrode sheet clamping unit 9 alone fails to reach the predetermined distance, likewise, the electrode sheet feeding unit 6 may be driven by the feeding unit movement motor 601 to move away from the electrode sheet clamping unit 9, to enable the distance between the electrode sheets that have been subject to the cutting to reach the predetermined distance.

The electrode sheets can be conveniently clamped and moved by the electrode sheet feeding unit 6 and the electrode sheet clamping unit 9 according to the embodiments of the present disclosure. In addition, the electrode sheets can be moved in two directions simultaneously, making a distance adjustment for the electrode sheets more flexible.

In some embodiments, to improve a connection between the electrode sheets that have been subject to the cutting, the first connection unit 8 includes a first upper electrode sheet adhesive sticking mechanism 81 and a first lower electrode sheet adhesive sticking mechanism 82. The first upper electrode sheet adhesive sticking mechanism 81 and the first lower electrode sheet adhesive sticking mechanism 82 are opposite to each other at two sides of an electrode sheet clamping plate, for adhering the connection tape to each of two sides of the adjacent electrode sheets that have been subject to the cutting, to connect the adjacent electrode sheets that have been subject to the cutting.

Further referring to FIG. 3, the first upper electrode sheet adhesive sticking mechanism 81 and the first lower electrode sheet adhesive sticking mechanism 82 are disposed at two sides of the first electrode sheet clamping plate 604 and the second electrode sheet clamping plate 904, respectively, in such a manner that when the electrode sheets that have been subject to the cutting are connected, the connection tapes may be disposed at two sides of the electrode sheets simultaneously to connect the electrode sheets from the two sides of the electrode sheets. As illustrated in FIG. 3, when the first cutting unit 7 cuts off the electrode sheet, the cutting position is located between the first electrode sheet clamping plate 604 and the second electrode sheet clamping plate 904. When the first cutting unit 7 is moved away, the electrode sheets that have been subject to the cutting are exposed between the first electrode sheet clamping plate 604 and the second electrode sheet clamping plate 904. After the first electrode sheet clamping plate 604 and the second electrode sheet clamping plate 904 move the electrode sheets that have been subject to the cutting by the predetermined distance, the first upper electrode sheet adhesive sticking mechanism 81 and the first lower electrode sheet adhesive sticking mechanism 82 move relative to each other, and are in contact with the electrode sheet at the first electrode sheet clamping plate 604 and the electrode sheet at the second electrode sheet clamping plate 904 respectively, in such a manner that the electrode sheets at two ends are sandwiched therebetween, realizing an object of disposing the connection tapes at the two sides of the adjacent electrode sheets that have been subject to the cutting to connect the adjacent electrode sheets that have been subject to the cutting.

Simultaneously connecting the two sides of the electrode sheets that have been subject to the cutting by the first upper electrode sheet adhesive sticking mechanism 81 and the first lower electrode sheet adhesive sticking mechanism 82 can ensure connection strength of the electrode sheets that have been subject to the cutting, which provides a satisfying connection result.

In some embodiments, to enable the first connection unit 8 to operate more efficiently, the first upper electrode sheet adhesive sticking mechanism 81 or the first lower electrode sheet adhesive sticking mechanism 82 includes an adhesive preparation mechanism 810 and an adhesive sticking mechanism 830. The adhesive preparation mechanism 810 is configured to dispose the connection tape at the adhesive sticking mechanism 830. The adhesive sticking mechanism 830 is configured to connect, through the connection tape, the adjacent electrode sheets that have been subject to the cutting.

Further referring to FIG. 3, the first upper electrode sheet adhesive sticking mechanism 81 and the first lower electrode sheet adhesive sticking mechanism 82 adopt a same structure and are disposed at two sides of the electrode sheet, respectively. For ease of description, only the first upper electrode sheet adhesive sticking mechanism 81 is described in the embodiment of the present disclosure. When connecting the electrode sheets, the first connection unit 8 needs to apply adhesive to the electrode sheets for an arrangement of the connection tape every time cell winding is completed. To improve the efficiency of connecting the electrode sheets that have been subject to the cutting, the adhesive preparation mechanism 810 and the adhesive sticking mechanism 830 are provided according to the embodiment of the present disclosure. The adhesive preparation mechanism 810 is configured to dispose the connection tape at the adhesive sticking mechanism 830. The adhesive sticking mechanism 830 is configured to dispose the connection tape at the electrode sheet.

When the electrode sheets that have been subject to the cutting need to be connected, the adhesive preparation mechanism 810 disposes the connection tape at a surface of the adhesive sticking mechanism 830. The adhesive sticking mechanism 830 is moved to a position between the first electrode sheet clamping plate 604 and the second electrode sheet clamping plate 904 after adhesive preparation is completed, and is in contact with each of the electrode sheet at the first electrode sheet clamping plate 604 and the electrode sheet at the second electrode sheet clamping plate 904 to dispose the connection tapes at two sides of the electrode sheets that have been subject to the cutting. The length of the connection tape and a position at which the connection tape is disposed at the adhesive sticking mechanism 830 need to be predetermined to ensure that the connection tape can be adapted to the predetermined distance between the electrode sheets.

With the adhesive preparation mechanism 810 and the adhesive sticking mechanism 830, an efficiency of adhesive sticking can be greatly improved, and thus a winding efficiency of the battery cell can be improved.

In some embodiments, to improve an arrangement result of the connection tape, the adhesive preparation mechanism 810 and the adhesive sticking mechanism 830 are arranged adjacent to each other. The adhesive preparation mechanism 810 includes an adhesive feeding motor 824, an adhesive feeding finger 823, an adhesive feeding slide rail 822, and an adhesive tape cutter 821. The adhesive sticking mechanism 830 includes an adhesive sticking wheel 831 and an adhesive preparation pressing mechanism 832. The adhesive feeding finger 823 is disposed at the adhesive feeding slide rail 822 and configured to clamp the connection tape. The adhesive feeding finger 823 is driven by the adhesive feeding motor 824 to move an end of the connection tape to the adhesive preparation pressing mechanism 832 along the adhesive feeding slide rail 822. When the end of the connection tape is tightly pressed by the adhesive preparation pressing mechanism 832 against the adhesive sticking wheel 831, the adhesive feeding finger 823 releases the connection tape to perform resetting. The adhesive preparation pressing mechanism 832 is opposite to the adhesive sticking wheel 831, and configured to tightly press the end of the connection tape against the adhesive sticking wheel 831 when the connection tape is moved by the adhesive feeding finger 823 to the adhesive preparation pressing mechanism 832. The connection tape rotates by a predetermined distance under driving of the adhesive sticking wheel 831. The adhesive tape cutter 821 is configured to cut off the connection tape.

As illustrated in FIG. 3, the adhesive preparation mechanism 810 includes an adhesive tape roll 814. The adhesive tape roll 814 is a raw material for the connection tape and includes an adhesive tape or other connection tapes. The connection tape 813 is conveyed to the adhesive feeding finger 823 by a first roller 811 and a second roller 812. The adhesive feeding finger 823 is disposed at the adhesive feeding slide rail 822 and configured to clamp the connection tape. The adhesive feeding finger 823 may be driven by the adhesive feeding motor 824 to move along the adhesive feeding slide rail 822, and thus to drive the connection tape to move. The adhesive tape cutter 821 is provided at a side of the adhesive feeding finger 823 and configured to cut off the connection tape.

The adhesive sticking mechanism 830 includes the adhesive sticking wheel 831 and the adhesive preparation pressing mechanism 832. The adhesive sticking wheel 831 has a wheel-like structure, is rotatable around an axis, and is configured to dispose the connection tape. The adhesive preparation pressing mechanism 832 is opposite to the adhesive sticking wheel 831, and is configured to tightly press the connection tape against a surface of the adhesive sticking wheel 831. The adhesive preparation pressing mechanism 832 and the adhesive sticking wheel 831 are arranged together.

During adhesive preparation, as illustrated in FIG. 3, the adhesive feeding finger 823 clamps a free end of the connection tape, and is driven by the adhesive feeding motor 824 to move towards the adhesive preparation pressing mechanism 832 and to move the free end of the connection tape to a position between the adhesive preparation pressing mechanism 832 and the adhesive sticking wheel 831. The adhesive preparation pressing mechanism 832 is moved towards the adhesive sticking wheel 831, and is configured to press the free end of the connection tape against the surface of the adhesive sticking wheel 831, in such a manner that the free end of the connection tape is connected to the surface of the adhesive sticking wheel 831. Meanwhile, the adhesive feeding finger 823 releases the connection tape to perform resetting.

The adhesive sticking wheel 831 is configured to drive the free end of the connection tape to rotate, which in turn enables the connection tape to be disposed at the surface of the adhesive sticking wheel 831. After the adhesive sticking wheel 831 is rotated by a predetermined distance, i.e., the connection tape of the predetermined distance is disposed at the surface of the adhesive sticking wheel 831, the adhesive preparation pressing mechanism 832 lifts up and performs resetting after the adhesive tape cutter 821 cuts off the connection tape, and thus the adhesive preparation is completed. The adhesive sticking wheel 831 is rotated to a specified position and waits to dispose the connection tape at the electrode sheets that have been subject to the cutting.

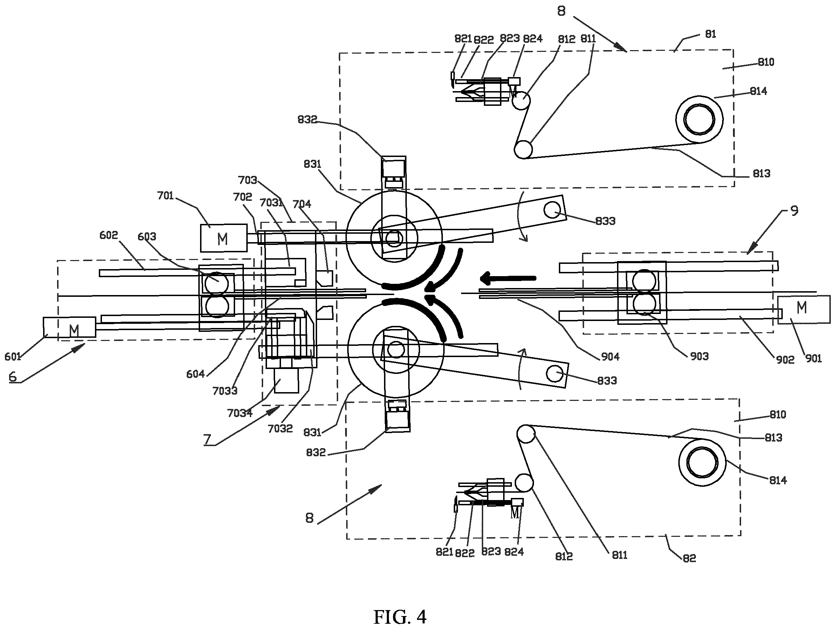

FIG. 4 is a schematic diagram of connecting electrode sheets by the cell winding device. During the adhesive sticking, as illustrated in FIG. 4, after the electrode sheet is cut by the first cutting unit 7, the first electrode sheet clamping plate 604 of the electrode sheet feeding unit 6 and the second electrode sheet clamping plate 904 of the electrode sheet clamping unit 9 move the electrode sheets that have been subject to the cutting to a predetermined position and likewise, the adhesive sticking wheel 831 is moved to the specified position. Subsequently, the adhesive sticking wheels 831 on the two sides of the electrode sheet clamp the electrode sheet exposed at a side and each dispose the connection tape at an end of the electrode sheet exposed at the side. The electrode sheets are driven by the first electrode sheet clamping plate 604 of the electrode sheet feeding unit 6 and the second electrode sheet clamping plate 904 of the electrode sheet clamping unit 9 to simultaneously move towards a side. The adhesive sticking wheel 831 is also rotated in a same direction with a movement of the electrode sheet clamping plate. FIG. 4 illustrates a movement direction of each of the electrode sheet clamping plate and the adhesive sticking wheel 831. While the adhesive sticking wheels 831 are rotating, the connection tapes on the adhesive sticking wheels 831 at the two sides of the electrode sheet are bonded together. With rotations of the adhesive sticking wheels 831, the adhesive sticking wheels 831 are in contact with the electrode sheet at another side and enable an end of the electrode sheet at the other side to be sandwiched between the adhesive sticking wheels 831, in such a manner that another end of the connection tape is connected to the end of the electrode sheet at the other side, realizing a connection between the electrode sheets at the two sides. After the connection is completed, the adhesive sticking wheel 831 is subjected to the position return. The electrode sheets connected to each other are released by the first electrode sheet clamping plate 604 of the electrode sheet feeding unit 6 and the second electrode sheet clamping plate 904 of the electrode sheet clamping unit 9, and are continued to be conveyed to the winding unit 13 by the electrode sheet feeding motor 603.

With the adhesive sticking wheel 831, the electrode sheets can be connected by rotating, and thus the length of the adhesive tape can be conveniently and flexibly controlled based on the distance between the electrode sheets that have been subject to the cutting, which is convenient and quick, greatly improving the efficiency of connecting the electrode sheets.

In some embodiments, to facilitate a movement of the adhesive sticking wheel 831, the adhesive sticking mechanism 830 includes an adhesive pressing plate rotation motor 833. The adhesive pressing plate rotation motor 833 is configured to drive the adhesive sticking wheel 831 to move, in such a manner that the adhesive sticking wheel 831 is located at the adhesive preparation mechanism 810 or at the electrode sheet clamping plate

As illustrated in FIG. 3 and FIG. 4, the adhesive pressing plate rotation motor 833 is connected to the adhesive sticking wheel 831 and is capable of driving the adhesive sticking wheel 831 to move up and down. During the adhesive preparation, the adhesive pressing plate rotation motor 833 positions the adhesive sticking wheel 831 at the side of the adhesive preparation mechanism 810, which allows the adhesive preparation mechanism 810 to dispose the connection tape at the surface of the adhesive sticking wheel 831. When the adhesive sticking is required, the adhesive pressing plate rotation motor 833 positions the adhesive sticking wheel 831 at a side of the electrode sheet clamping plate. The adhesive sticking wheel 831 is positioned at a suitable position by controlling the adhesive pressing plate rotation motor 833, in such a manner that the connection tape at the surface of the adhesive sticking wheel 831 is in contact with the electrode sheets that have been subject to the cutting. The adhesive sticking wheel 831 is pressed against and cooperates with the adhesive sticking wheel 831 at an opposite side to connect the adhesive tapes at two sides to each other. When the adhesive sticking is completed, the adhesive pressing plate rotation motor 833 returns the adhesive sticking wheel 831 to the side of the adhesive preparation mechanism 810 for the adhesive preparation.

With the adhesive pressing plate rotation motor 833, the adhesive sticking wheel 831 can be easily moved to freely switch between the adhesive preparation and the adhesive sticking, which greatly improves the efficiency of connecting the electrode sheets.

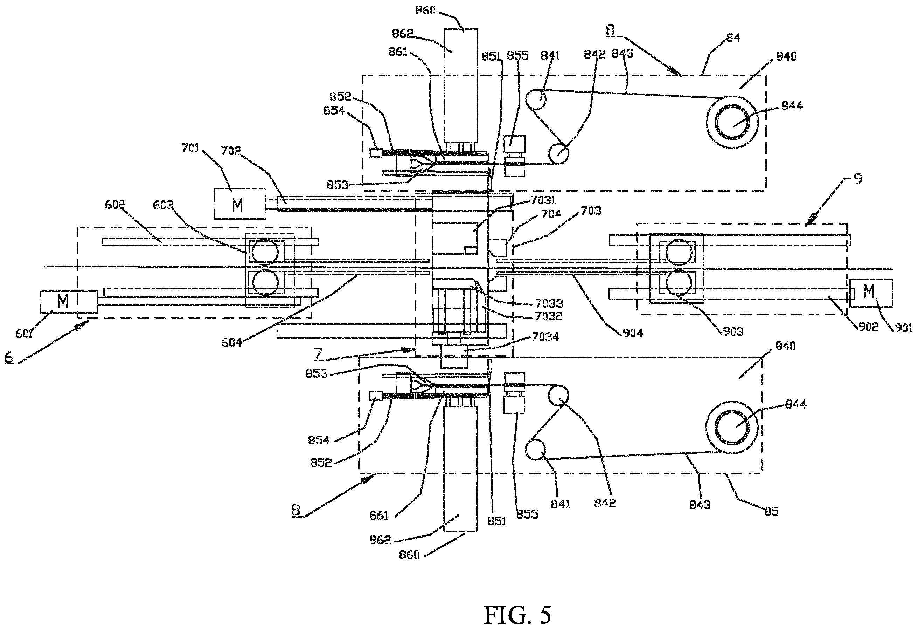

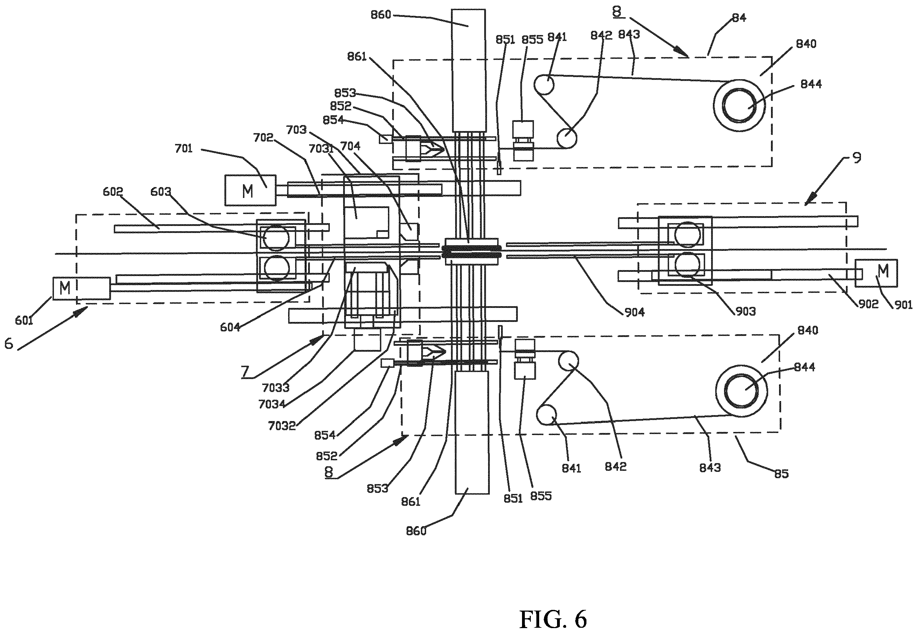

In some embodiments, the present disclosure further provides another form of adhesive preparation mechanism 840 and adhesive sticking mechanism 860. Specifically, referring to FIG. 5 and FIG. 6, the first connection unit 8 includes a second upper electrode sheet adhesive sticking mechanism 84 and a second lower electrode sheet adhesive sticking mechanism 85. The second upper electrode sheet adhesive sticking mechanism 84 and the second lower electrode sheet adhesive sticking mechanism 85 are disposed opposite to each other at two sides of the electrode sheet clamping plate, for adhering the connection tape to each of two sides of the adjacent electrode sheets that have been subject to the cutting, to connect the adjacent electrode sheets that have been subject to the cutting. The second upper electrode sheet adhesive sticking mechanism 84 and the second lower electrode sheet adhesive sticking mechanism 85 adopt a same structure and are disposed at two sides of the electrode sheet, respectively. For ease of description, only the second upper electrode sheet adhesive sticking mechanism 84 is described in the embodiments of the present disclosure.

Further referring to FIG. 5 and FIG. 6, the adhesive preparation mechanism 840 and the adhesive sticking mechanism 860 are arranged adjacent to each other. The adhesive preparation mechanism 840 includes an adhesive feeding motor 854, an adhesive feeding finger 853, an adhesive feeding slide rail 852, and an adhesive tape cutter 851. The adhesive sticking mechanism 860 includes an adhesive sticking pressing plate and an adhesive preparation pressing mechanism 862. The adhesive feeding finger 853 is disposed at the adhesive feeding rail 852 and configured to clamp the connection tape. The adhesive feeding finger 853 is driven by the adhesive feeding motor 854 to move the connection tape to the adhesive sticking pressing plate along a slider. When the connection tape is sticked by the adhesive sticking pressing plate, the adhesive feeding finger 853 releases the connection tape. The adhesive sticking pressing plate is disposed at an end of the adhesive preparation pressing mechanism 862, and configured to stick the connection tape when the connection tape is moved by the adhesive feeding finger 853 to the adhesive sticking pressing plate. The adhesive preparation pressing mechanism 862 is configured to drive the adhesive sticking pressing plate to a specified position. The adhesive tape cutter 851 is configured to cut off the connection tape.

As illustrated in FIG. 5, the adhesive preparation mechanism 840 includes an adhesive tape roll 844. The adhesive tape roll 844 is a raw material for the connection tape and includes an adhesive tape or other connection tapes. The connection tape 843 is conveyed to the adhesive feeding finger 853 by a first roller 841 and a second roller 842. The adhesive feeding finger 853 is disposed at the adhesive feeding slide rail 852 and configured to clamp the connection tape. The adhesive feeding finger 853 may be driven by the adhesive feeding motor 854 to move along the adhesive feeding slide rail 852, and thus to drive the connection tape to move. The adhesive pressing mechanism is disposed at a position opposite to the adhesive feeding finger 853 and configured to press and fix the connection tape. The adhesive tape cutter 851 is provided at a side of the adhesive pressing mechanism and configured to cut off the connection tape.

The adhesive sticking mechanism 860 includes the adhesive sticking pressing plate and the adhesive preparation pressing mechanism 862. The adhesive preparation pressing mechanism 862 may be a single cylinder, a combination of cylinders, an electric screw, or other mechanisms. The adhesive sticking pressing plate is disposed at the end of the adhesive preparation pressing mechanism 862. The adhesive sticking pressing plate has a flat plate structure. Driven by the adhesive preparation pressing mechanism 862, the adhesive sticking pressing plate may reciprocate towards the electrode sheet, and the adhesive tape may be sticked by the surface of the adhesive sticking pressing plate.

During the adhesive preparation, as illustrated in FIG. 5, the adhesive feeding finger 853 is driven by the adhesive feeding motor 854 to move towards the adhesive pressing mechanism. The adhesive pressing mechanism is provided with an exposed connection tape. When clamped by the adhesive feeding finger 853, the exposed connection tape at the adhesive pressing mechanism is released by the adhesive pressing mechanism. The adhesive feeding motor 854 is configured to drive the adhesive feeding finger 853 to return to its original position and drive the connection tape to move, in such a manner that the connection tape is located at a position corresponding to the adhesive sticking pressing plate. The connection tape is clamped by the adhesive pressing mechanism. The adhesive tape is sticked by the adhesive sticking pressing plate. The connection tape is cut by the adhesive tape cutter 851 and released by the adhesive feeding finger 853. Driven by the adhesive preparation pressing mechanism 862, the adhesive sticking pressing plate moves the connection tape to a standby position and prepares to connect the electrode sheets. Thus, actions for the adhesive preparation are completed.

FIG. 6 is a schematic diagram of connecting electrode sheets by the cell winding device. During the adhesive sticking, as illustrated in FIG. 6, after the electrode sheet is cut by the first cutting unit 7, the first electrode sheet clamping plate 604 of the electrode sheet feeding unit 6 and the second electrode sheet clamping plate 904 of the electrode sheet clamping unit 9 move the electrode sheets that have been subject to the cutting to the predetermined position and likewise, the adhesive sticking pressing plate is moved to the specified position. Subsequently, the adhesive sticking pressing plates on two sides of the electrode sheet simultaneously tightly press the exposed electrode sheet at the first electrode sheet clamping plate 604 of the electrode sheet feeding unit 6 and the exposed electrode sheet at the second electrode sheet clamping plate 904 of the electrode sheet clamping unit 9, in such a manner that the connection tapes at the surfaces of the adhesive sticking pressing plates are connected to the exposed electrode sheets. Therefore, the electrode sheets are connected to each other. Meanwhile, the connection tapes at the surfaces of the adhesive sticking pressing plates at the two sides of the electrode sheets are also connected to each other, realizing a connection of the electrode sheets that have been subject to the cutting. After the connection is completed, the adhesive sticking pressing plates each are subjected to the position return. The electrode sheets connected to each other are released by the first electrode sheet clamping plate 604 of the electrode sheet feeding unit 6 and the second electrode sheet clamping plate 904 of the electrode sheet clamping unit 9, and are continued to be conveyed to the winding unit 13 by the electrode sheet feeding motor 603.

With the adhesive sticking pressing plate, the electrode sheets can be connected quickly, and such a structure is simple, greatly improving the efficiency of connecting the electrode sheets.

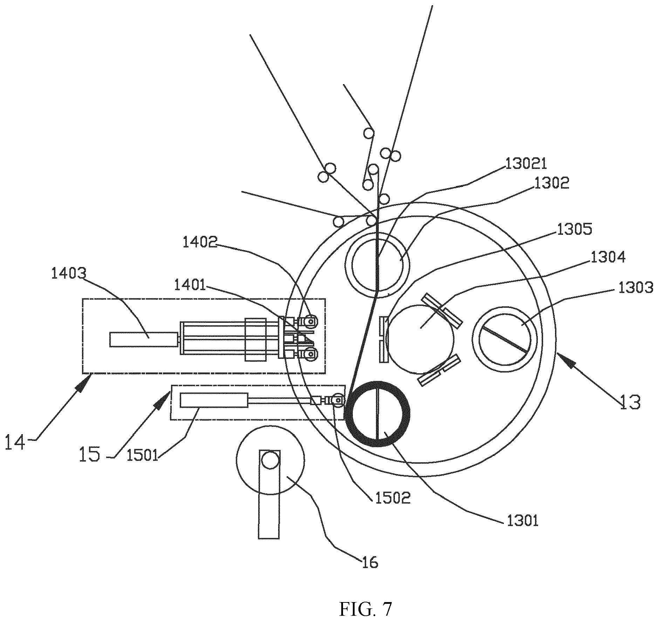

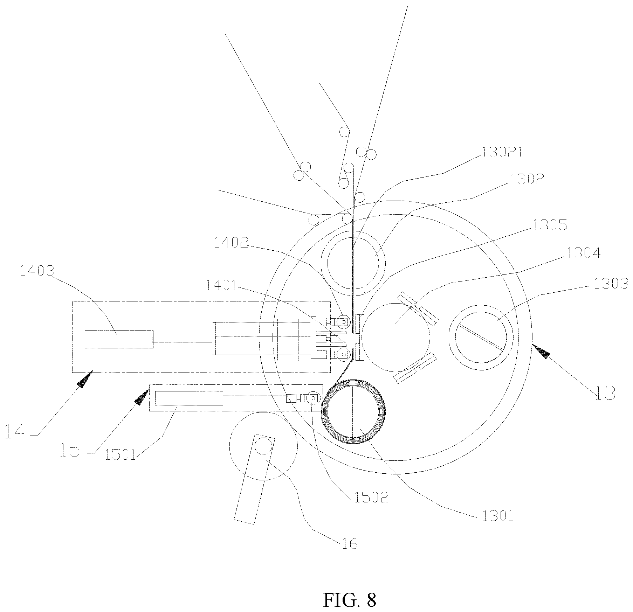

In some embodiments, as illustrated in FIG. 7 and FIG. 8, after the connection of the electrode sheets is completed, the winding unit 13 winds the connected electrode sheets. The winding unit 13 includes a first winding station 1301, a second winding station 1302, and a third winding station 1303. The winding unit 13 is configured to drive, after the first winding station 1301 completes winding, the first winding station 1301 and the second winding station 1302 to rotate, in such a manner that the connection tape corresponds to the second cutting unit 14. The second cutting unit 14 is configured to cut off the connection tape after the connection tape is clamped by the second winding station 1302.

As illustrated in FIG. 7 and FIG. 8, the winding unit 13 includes a winding shaft 1304 and a plurality of winding stations. The winding stations include the first winding station 1301, the second winding station 1302, and the second winding station 1303. The winding unit 13 can be configured to drive each winding station to rotate around the winding shaft 1304, realizing a position switch between the winding stations. A cutting pad 1305 is provided on the winding shaft 1304 at a position corresponding to each spacing between the winding stations, and is configured to cooperate with the second cutting unit 14 to perform cutting on the electrode sheet and the separator that are wound. The winding station includes a winding pin 13021. At the beginning of winding, the winding pin 13021 extends out from an inside of the winding station to clamp the connection tape. After the connection tape is clamped, the winding station itself rotates to wind the electrode sheet and the separator.

The second cutting unit 14 includes a cutter 1401, a positioning wheel 1402, and a cutter motor 1403. The cutter 1401 and the positioning wheel 1402 are arranged together. The cutter motor 1403 is configured to drive the positioning wheel 1402 and the cutter 1401 to move. Driven by the cutter motor 1403, the positioning wheel 1402 is configured to be in contact with the connection tape and press the connection tape onto the cutting pad 1305. The cutter 1401 is located at a side of the positioning wheel 1402 and is configured to be driven by the cutter motor 1403 to cut off the connection tape.

When the first winding station 1301 completes winding, the winding unit 13 drives the first winding station 1301 and the second winding station 1302 to rotate, to switch the second winding station 1302 to a standby winding station. In this case, the connection tape between and connecting the adjacent electrode sheets that have been subject to the cutting is located at a region between the first winding station 1301 and the second winding station 1302, and corresponds to the second cutting unit 14. The winding pin 13021 of the second winding station 1302 extends out to clamp the uncut connection tape brought out by the first winding station 1301. When the second winding station completes clamping the connection tape, the second cutting unit 14 cuts off the connection tape and the separator at the connection tape between the electrode sheets, and the second winding station 1302 starts winding the battery cell.

By cutting off the electrode sheet at the connection tape, a seamless connection of winding at different stations can be realized, which eliminates the action of feeding the electrode sheet, greatly improving the efficiency of the electrode sheet winding.

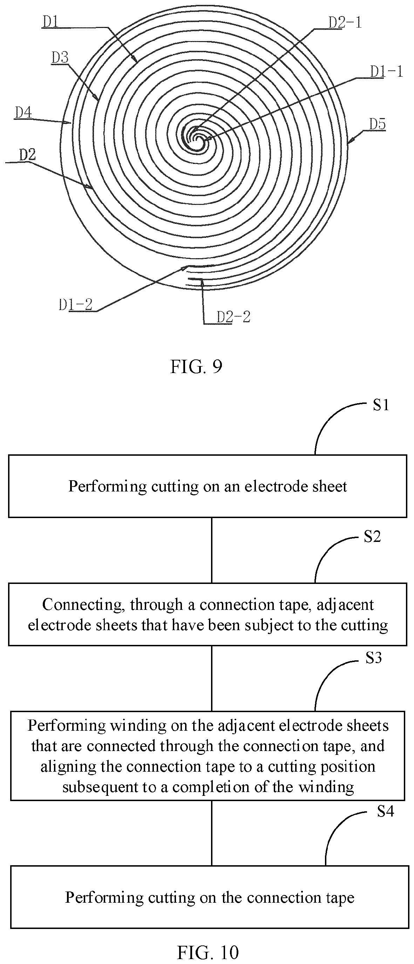

FIG. 9 illustrates a structure of a battery cell wound by the cell winding device according to the embodiments of the present disclosure. A cathode electrode sheet D 1, an upper separator D3, an anode electrode sheet D2, and a lower separator D4 are arranged sequentially. Since a head adhesive sticking D1-1 of the cathode electrode sheet and a head adhesive sticking D2-2 of the anode electrode sheet are realized by connections tapes of different lengths, an excess-length design that in an inner loop an anode electrode exceeds a cathode electrode is realized. At the finishing position, a tail adhesive sticking D1-2 of the cathode electrode sheet and a tail adhesive sticking D2-2 of the anode electrode sheet realize an excess-length design that at the finishing position the anode electrode exceeds the cathode electrode. In addition, since the connection tape is provided at each of the head and the tail of the electrode sheet, an action of winding the redundant separators at the head is eliminated, which greatly saves a usage of separators.

Therefore, with the cell winding device according to the embodiments of the present disclosure, after the electrode sheet is cut, an enough space is reserved between the electrode sheets that have been subject to the cutting, for the connection tapes of different lengths to connect the electrode sheets that have been subject to the cutting, which on the one hand solves the problem of the head offset of the electrode sheet caused by feeding the electrode sheet alone, and on the other hand avoids pre-winding of the separator, greatly saving the use of the separators for the innermost loop and the outermost loop.

In some embodiments, a separator finishing and smoothing unit 15 is provided at a position corresponding to the winding station. The separator finishing and smoothing unit 15 includes a smoothing motor 1501 and a smoothing wheel 1502. When the first winding station 1301 drives the wound battery cell to move to the second winding station 1302, the smoothing motor 1501 drives the smoothing wheel 1502 to perform a smoothing operation on a surface of the wound battery cell at the first winding station 1301 to flatten the wound battery cell.

In some embodiments, the adhesive preparation unit 16 is further included. The adhesive preparation unit 16 is configured to perform finishing and sticking on the battery cell to strengthen protection of the battery cell.

With the cell winding device according to the embodiments of the present disclosure, the electrode sheets that have been subject to the cutting are connected through the connection tape, which eliminates the action of feeding the electrode sheet, greatly improving the efficiency of the electrode sheet winding, and solving the problems of the folding, the head offset, and the tail offset of the electrode sheet that are caused by the feeding of the electrode sheet. Thus, the excess-length design of the head and the tail of the electrode sheet can be better realized. The connection tape can further protect the cutting positions of the electrode sheets, which solves a problem that the fins of the electrode sheets that have been subject to the cutting are likely to pierce the separator. In addition, the electrode sheet winding device cuts off the electrode sheet in advance and adheres the connection tape on the electrode sheets that have been subject to the cutting, which solves the problem that when a conventional electrode sheet winding device cuts off the electrode sheet above a winding pin, the generated dust falls into a coil core, greatly improving the efficiency of the cell winding and improving the performance of the battery cell.

In some embodiments, the embodiments of the present disclosure further provide a cell winding method. The cell winding method can be applied to the cell winding device according to the above embodiments. Cell winding is performed by applying the method to the above-mentioned cell winding device. Of course, the method can also be applied to other cell winding devices, in which case the cell winding can be completed as well.

The cell winding method according to the embodiments of the present disclosure is as illustrated in FIG. 10. For ease of description, as an example, in the embodiment of the present disclosure, the cell winding method is applied in the cell winding device according to the above-mentioned embodiments. The method includes operations at blocks.

At block S1, the cutting is performed on an electrode sheet.

When preparation of the electrode sheet is done, the electrode sheet enters a first cutting device after unwinding, tension buffering, and correction. The first cutting device is configured to perform cutting on the electrode sheet. The cutting may be performed in a variety of ways. For example, the cutting may be performed by means of a cutter, laser light, or the like. The present disclosure is not limited to any of these examples.

Timing and a position of the cutting on the electrode sheet need to be determined based on a size of the wound battery cell. When the size of the wound battery cell is determined, a desired length of the electrode sheet may be determined. When a predetermined length is reached, the cutting is performed on the electrode sheet.

Also, since the electrode sheets located in different layers usually have different lengths, e.g., a length of the electrode sheet located in the inner loop is usually smaller than a length of the electrode sheet located in an outer loop, a length of the cutting for the electrode sheet needs to be predetermined freely as desired.

At block S2, the adjacent electrode sheets that have been subject to the cutting are connected through the connection tape.

Subsequent to a completion of the cutting on the electrode sheet, the electrode sheets that have been subject to the cutting are connected through the connection tape, in such a manner that the electrode sheets re-become an entirety.

Various forms may be adopted for the connection tape. For example, an adhesive tape is adopted to adhesively connect two adjacent electrode sheets, or welding or the like is adopted to connect the two adjacent electrode sheets. Different batteries have different requirements for battery cells, and thus the length of the connection tape varies. That is, a spacing between battery cells varies. The length of the connection tape includes lengths of parts of the connection tape connected to electrode sheets at two ends and a length of a spacing between the electrode sheets at the two ends, when the connection tape is connected to the electrode sheets at the two ends. The lengths of the parts of the connection tape connected to the electrode sheets may be set freely as desired. Typically, each of the parts of the connection tape connected to the electrode sheets is set to a long length when a strong connection is needed. The length between the electrode sheets is related to a wrapping strategy for the positive electrode sheet and the negative electrode sheet during the winding of the battery cell. By controlling the length of the connection tape between the electrode sheets, an excess-length arrangement between the positive electrode sheet and the negative electrode sheet at the inner side and the outer side of the battery cell can be realized.

At block S3, a winding is performed on the adjacent electrode sheets connected through the connection tape, and the connection tape is aligned to a cutting position subsequent to a completion of the winding.

At a finishing stage of the cell winding, a tail of an electrode sheet and a head of an adjacent electrode sheet are connected through the connection tape. Therefore, at the finishing stage of the cell winding, the electrode sheets will be fully wound inside the battery cell and only part of the connection tape is exposed. Therefore, subsequent to a completion of the cell winding, aligning the connection tape to the cutting position can allow the battery cell subjected to a completion of winding to be rewound through the connection tape, which allows winding of an innermost loop of a to-be-wound battery cell to be completed through the connection tape.

At block S4, the connection tape is cut.

To ensure the cutting result for the connection tape, the second cutting unit may perform cutting in a variety of ways. For example, the cutting may be performed by means of a cutter, laser light, or the like. The present disclosure is not specifically limited to any of these examples.

According to the embodiments of the present disclosure, after the electrode sheet is cut, the electrode sheets that have been subject to the cutting are connected end to end through the connection tape. The electrode sheets connected through the connection tape enters the winding unit to be wound with the separator. After the winding is completed, the connection tape is cut to form the wound battery cell. On the one hand, the connection tape can protect cutting positions of the electrode sheets, preventing the fins of the electrode sheets that have been subject to the cutting from piercing the separator. On the other hand, since the electrode sheets that have been subject to the cutting are connected end to end through the connection tape, new winding can be started simultaneously with a winding completion simply by cutting off the connection tape, which eliminates the action of feeding the electrode sheet, greatly improving the efficiency of the electrode sheet winding, and solving the problems of the folding, the head offset, and the tail offset of the electrode sheet that are caused by the feeding of the electrode sheet. Thus, problems in the excess-length design of the positive electrode and the negative electrode can be avoided. Further, the electrode sheet winding device cuts off the electrode sheet in advance and adheres the connection tape on the electrode sheets that have been subject to the cutting, which solves the problem that when a conventional electrode sheet winding device cuts off the electrode sheet above a winding pin, the generated dust falls into a coil core.

In some embodiments, to adapt to different sizes of the battery cell, during the cutting performed on the electrode sheet, the electrode sheet needs to be moved to a cutter, to perform the cutting on the electrode sheet by the cutter. Electrode sheets that have been subject to the cutting are moved, in such a manner that the electrode sheets that have been subject to the cutting are spaced apart from each other by a predetermined distance.

Considering the excess-length design of the positive electrode sheet and the negative electrode sheet, different size requirements of different battery cells, and different movement distances of the electrode sheets located in the inner loop and the outer loop of the battery cell, lengths of the connection tapes between the electrode sheets also vary. Therefore, to facilitate a connection through the connection tape, the electrode sheets that have been subject to the cutting need to be moved subsequent to the completion of the cutting on the electrode sheet to separate the electrode sheets that have been subject to the cutting by the predetermined distance, for meeting size requirements of the connection tape for different battery cells and different electrode sheets.

In this way, the length of the connection tape can be easily adjusted to ensure the excess-length design of the positive electrode and the negative electrode, improving the performance of the battery cell.

In some embodiments, to improve an efficiency of connecting the connection tape to the electrode sheet, the electrode sheets that have been subject to the cutting are clamped by an electrode sheet clamping plate. An adhesive sticking wheel is moved to the electrode sheet clamping plate. A surface of the adhesive sticking wheel is provided with the connection tape. An end of the connection tape is adhered on an end of a first electrode sheet that have been subject to the cutting by an engagement between the adhesive sticking wheel and the electrode sheet clamping plate. The electrode sheets that have been subject to the cutting are driven by the electrode sheet clamping plate to move. The adhesive sticking wheel is rotated along with a movement of the electrode sheet clamping plate to adhere another end of the connection tape on an end of a second electrode sheet that have been subject to the cutting.

To improve an efficiency of connecting the electrode sheets that have been subject to the cutting, the connection tape is set by the adhesive sticking wheel. The surface of the adhesive sticking wheel is provided with the connection tape. When setting the connection tape, the adhesive sticking wheel drives the connection tape to move close to the electrode sheet at a side formed after the cutting to connect the connection tape to the electrode sheet at the side, and then the electrode sheet clamping plate drives the electrode sheet to move. Meanwhile, the adhesive sticking wheel rotates synchronously, and sets the connection tape at the electrode sheet at the side when the electrode sheet at another side formed after the cutting is connected to another end of the connection tape at the adhesive sticking wheel, realizing a connection of the adjacent electrode sheets that have been subject to the cutting.

With the adhesive sticking wheel, the connection tape can be set regardless of the length of the connection tape. By rotating the adhesive sticking wheel, the connection tape can be set at any length, which greatly improves an efficiency and convenience of setting the connection tape.

In some embodiments, to improve the efficiency of setting the connection tape, in addition to an ability of the adhesive sticking wheel to conveniently connect the electrode sheets that have been subject to the cutting, an efficiency of setting the connection tape at the surface of the adhesive sticking wheel also needs to be improved. In the embodiments of the present disclosure, the connection tape is clamped by an adhesive feeding finger, and the end of the connection tape is moved to an adhesive preparation pressing mechanism, in such a manner that the end of the connection tape is tightly pressed against the surface of the adhesive sticking wheel by the adhesive preparation pressing mechanism. The connection tape is released by the adhesive feeding finger and a position return is performed by the adhesive feeding finger. The connection tape is cut by the adhesive tape cutter, subsequent to the connection tape rotating a predetermined distance under driving of the adhesive sticking wheel.

To conveniently prepare the connection tape for the adhesive sticking wheel, the adhesive feeding finger is provided according to the embodiments of the present disclosure. The connection tape is driven by the adhesive feeding finger to move to the surface of the adhesive sticking wheel. With the adhesive preparation pressing mechanism, an end of the connection tape is tightly pressed against the surface of the adhesive sticking wheel, driven by the adhesive sticking wheel to rotate, and cut by the adhesive tape cutter when a desired length of the connection tape is reached. A rotation angle of the adhesive sticking wheel depends on the desired length of the connection tape. If the desired length of the connection tape exceeds a circumference of the adhesive sticking wheel, the adhesive sticking wheel may be rotated a plurality of revolutions.

The connection tape is disposed at the surface of the adhesive sticking wheel by means of the adhesive feeding finger. The adhesive sticking wheel is rotated. The connection tape is cut when the desired length is reached, greatly improving an efficiency of preparing the connection tape for the adhesive sticking wheel.

In some embodiments, another method for connecting, through the connection tape, the adjacent electrode sheets that have been subject to the cutting is further provided. The electrode sheets that have been subject to the cutting are clamped by an electrode sheet clamping plate. An adhesive sticking pressing plate is moved to the electrode sheet clamping plate. The connection tape is sticked to a surface of the adhesive sticking pressing plate. The adhesive sticking pressing plate is moved to connect two ends of the connection tape to the electrode sheets that have been subject to the cutting, respectively.

In this way, the connection tape is directly sticked to the surface of the adhesive sticking pressing plate. The connection tape is driven by the adhesive sticking pressing plate to directly connect the adjacent electrode sheets that have been subject to the cutting. This way can connect the electrode sheets quickly and has a simple structure, which greatly improve the efficiency of connecting the electrode sheets.

In some embodiments, to improve the efficiency of setting the connection tape, in addition to an ability of the adhesive sticking pressing plate to conveniently connect the electrode sheets that have been subject to the cutting, an efficiency of setting the connection tape at the surface of the adhesive sticking pressing plate also needs to be increased. According to the embodiments of the resent disclosure, the connection tape is clamped by an adhesive feeding finger and moved to the adhesive sticking pressing plate. The connection tape is released by the adhesive feeding finger subsequent to a sticking of the connection tape to the adhesive sticking pressing plate. The connection tape is cut by an adhesive tape cutter.

When the connection tape is prepared for the adhesive sticking pressing plate, the adhesive feeding finger clamps the connection tape to move the connection tape to a side of the adhesive sticking pressing plate. The connection tape is sticked to the surface of the adhesive sticking pressing plate through sticking, and cut by the adhesive tape cutter. In this way, the connection tape can be quickly set at the surface of the adhesive sticking pressing plate, and a simple structure can be realized, which greatly improve an efficiency of preparing the connection tape.

In some embodiments, to improve the efficiency of the cell winding, a second winding station is moved to a first winding station, subsequent to a completion of winding by the first winding station. The connection tape is cut by a second cutting unit, subsequent to clamping of the connection tape by the second winding station.

Subsequent to the completion of the winding by the first winding station, the winding unit drives the first winding station and the second winding station to rotate, to switch the second winding station to a standby winding station. In this case, the connection tape is located at a region between the first winding station and the second winding station, and corresponds to the second cutting unit. The winding pin of the second winding station extends out to clamp the connection tape. The connection tape and the separator are cut by the second cutting unit. Winding of the battery cell starts at the second winding station.

In this way, a seamless connection of winding at different stations can be realized, which eliminates the action of feeding the electrode sheet, greatly improving the efficiency of the electrode sheet winding.

In some embodiments, to improve the efficiency of the electrode sheet winding, subsequent to the completion of the winding by the first winding station, the connection tape is cut, and the second winding station performs new electrode sheet winding.

By setting the connection tape between the electrode sheets, a seamless connection can be realized between different winding stations, which greatly improves the efficiency of the cell winding.

In summary, with the cell winding device and the cell winding method according to the embodiments of the present disclosure, the electrode sheets that have been subject to the cutting are connected through the connection tape, which eliminates the action of feeding the electrode sheet, greatly improving the efficiency of the electrode sheet winding, and solving the problems of the folding, the head offset, and the tail offset of the electrode sheet that are caused by the feeding of the electrode sheet. Thus, the excess-length design of the head and the tail of the electrode sheet can be better realized. The connection tape can further protect the cutting positions of the electrode sheets, which solves the problem that the fins of the electrode sheets that have been subject to the cutting are likely to pierce the separator. In addition, the electrode sheet winding device cuts off the electrode sheet in advance and adheres the connection tape on the electrode sheets that have been subject to the cutting, which solves the problem that when a conventional electrode sheet winding device cuts off the electrode sheet above a winding pin, the generated dust falls into a coil core, greatly improving the efficiency of the cell winding and improving the performance of the battery cell.

Finally, it should be noted that each of the above embodiments is used only to illustrate, rather than to limit, the technical solutions of the present disclosure. Although the present disclosure has been described in detail with reference to the foregoing embodiments, it is conceivable for those skilled in the art that modifications can be made to the technical solutions described in the foregoing embodiments, or equivalent replacements can be made to some or all of the technical features in the technical solutions described in the foregoing embodiments. These modifications or equivalent replacements, which do not depart the essence of corresponding technical solutions from the scope of the technical solutions of the embodiments of the present disclosure, shall fall within the scope of the claims and the specification of the present disclosure. In particular, the technical features mentioned in individual embodiments can be combined arbitrarily without any structural conflict. The present disclosure is not limited to the particular embodiments disclosed herein, and includes all technical solutions falling within the scope of the claims.

## Claims

1. A cell winding device, comprising a first cutting unit, a first connection unit, a winding unit, and a second cutting unit, wherein:
the first cutting unit is configured to perform cutting on an electrode sheet;
the first connection unit is adjacent to the first cutting unit, and configured to connect, through a connection tape, adjacent electrode sheets that have been subject to the cutting;
the winding unit is configured to perform winding on the adjacent electrode sheets that are connected through the connection tape, and to drive, in response to completion of the winding, electrode sheets that are wound to move, in such a manner that the connection tape corresponds to the second cutting unit; and
the second cutting unit is configured to perform cutting on the connection tape.

2. The cell winding device according to claim 1, wherein the first cutting unit comprises a cutter, a cutter movement motor, and a cutter slide rail, the cutter being slidably disposed at the cutter slide rail, and the cutter movement motor being disposed at an end of the cutter slide rail and configured to drive the cutter to slide on the cutter slide rail.

3. The cell winding device according to claim 2, wherein:
the cutter comprises a stationary cutter, a movable cutter, an electrode sheet pressing plate, and a cutter motor;
the electrode sheet pressing plate is opposite to the stationary cutter and configured to press the electrode sheet against the stationary cutter; and
the movable cutter and the cutter motor are arranged together, the movable cutter being configured to cut off the electrode sheet when driven by the cutter motor.

4. The cell winding device according to claim 2 or 3, wherein the first cutting unit further comprises a dust suction mechanism, the dust suction mechanism being adjacent to the cutter and configured to perform dust suction after the electrode sheet is cut by the cutter.

5. The cell winding device according to any one of claims 1 to 4, further comprising an electrode sheet feeding unit and an electrode sheet clamping unit, wherein:
the electrode sheet feeding unit and the electrode sheet clamping unit are movably arranged relative to each other, and are configured to clamp the electrode sheet and drive the electrode sheet that has been subject to the cutting to move;
the first cutting unit is disposed between the electrode sheet feeding unit and the electrode sheet clamping unit, and is configured to perform the cutting on the electrode sheet in response to the electrode sheet being clamped by the electrode sheet feeding unit and the electrode sheet clamping unit; and
in response to the cutting being completed, the electrode sheet feeding unit and the electrode sheet clamping unit move relative to each other, in such a manner that the electrode sheets that have been subject to the cutting are spaced apart from each other by a predetermined distance.

6. The cell winding device according to claim 5, wherein:
the electrode sheet feeding unit comprises a feeding unit movement motor, a feeding unit movement slide rail, an electrode sheet feeding motor, and a first electrode sheet clamping plate, wherein the electrode sheet feeding motor and the first electrode sheet clamping plate are connected, and are configured to clamp the electrode sheet; wherein the electrode sheet feeding motor is slidably disposed at the feeding unit movement slide rail; wherein the feeding unit movement motor is disposed at an end of the feeding unit movement slide rail and configured to drive the first electrode sheet clamping plate to slide; and
the electrode sheet clamping unit comprises a clamping unit movement motor, a clamping unit movement slide rail, an electrode sheet clamping motor, and a second electrode sheet clamping plate, wherein the electrode sheet clamping motor is connected to the second electrode sheet clamping plate; wherein the second electrode sheet clamping plate is configured to clamp the electrode sheet; wherein the electrode sheet clamping motor is slidably disposed at the clamping unit movement slide rail; and wherein the clamping unit movement motor is disposed at an end of the clamping unit movement slide rail and configured to drive the second electrode sheet clamping plate to slide.

7. The cell winding device according to claim 6, wherein the first connection unit comprises a first upper electrode sheet adhesive sticking mechanism and a first lower electrode sheet adhesive sticking mechanism that are opposite to each other and arranged at two sides of an electrode sheet clamping plate, the first upper electrode sheet adhesive sticking mechanism and the first lower electrode sheet adhesive sticking mechanism being configured to stick the connection tape to each of two sides of the adjacent electrode sheets that have been subject to the cutting, and configured to connect the adjacent electrode sheets that have been subject to the cutting.

8. The cell winding device according to claim 7, wherein the first upper electrode sheet adhesive sticking mechanism or the first lower electrode sheet adhesive sticking mechanism comprises an adhesive preparation mechanism and an adhesive sticking mechanism, the adhesive preparation mechanism being configured to place the connection tape at the adhesive sticking mechanism, and the adhesive sticking mechanism being configured to connect, through the connection tape, the adjacent electrode sheets that have been subject to the cutting.

9. The cell winding device according to claim 8, wherein
the adhesive preparation mechanism and the adhesive sticking mechanism are adjacent to each other;
the adhesive preparation mechanism comprises an adhesive feeding motor, an adhesive feeding finger, an adhesive feeding slide rail, and an adhesive tape cutter;
the adhesive sticking mechanism comprises an adhesive sticking wheel and an adhesive preparation pressing mechanism;
the adhesive feeding finger is disposed at the adhesive feeding slide rail and configured to clamp the connection tape;
the adhesive feeding finger is driven by the adhesive feeding motor to move an end of the connection tape to the adhesive preparation pressing mechanism along the adhesive feeding slide rail;
in response to the end of the connection tape being tightly pressed by the adhesive preparation pressing mechanism against the adhesive sticking wheel, the adhesive feeding finger releases the connection tape and performs resetting;
the adhesive preparation pressing mechanism is opposite to the adhesive sticking wheel, and configured to tightly press the end of the connection tape against the adhesive sticking wheel in response to the connection tape being moved by the adhesive feeding finger to the adhesive preparation pressing mechanism;
the adhesive sticking wheel is configured to drive the connection tape to rotate by a predetermined distance; and
the adhesive tape cutter is configured to cut off the connection tape.

10. The cell winding device according to claim 9, wherein the adhesive sticking mechanism comprises an adhesive pressing plate rotation motor configured to drive the adhesive sticking wheel to move, in such a manner that the adhesive sticking wheel is located at the adhesive preparation mechanism or at the electrode sheet clamping plate.

11. The cell winding device according to any one of claims 8 to 10, wherein
the adhesive preparation mechanism and the adhesive sticking mechanism are adjacent to each other;
the adhesive preparation mechanism comprises an adhesive feeding motor, an adhesive feeding finger, an adhesive feeding slider, and an adhesive tape cutter;
the adhesive sticking mechanism comprises an adhesive sticking pressing plate and an adhesive preparation pressing mechanism;
the adhesive feeding finger is disposed at the adhesive feeding slider and configured to clamp the connection tape;
the adhesive feeding finger is driven by the adhesive feeding motor to move the connection tape to the adhesive sticking pressing plate along the adhesive feeding slider;
in response to the connection tape being sticked by the adhesive sticking pressing plate, the adhesive feeding finger releases the connection tape;
the adhesive sticking pressing plate is disposed at an end of the adhesive preparation pressing mechanism, and configured to stick the connection tape in response to the connection tape being moved by the adhesive feeding finger to the adhesive sticking pressing plate;
the adhesive preparation pressing mechanism is configured to drive the adhesive sticking pressing plate to a specified position; and
the adhesive tape cutter is configured to cut off the connection tape.

12. The cell winding device according to any one of claims 1 to 11, wherein the winding unit at least comprises a first winding station and a second winding station, wherein:
the winding unit is configured to drive, in response to the first winding station completing winding, the first winding station and the second winding station to rotate, in such a manner that the connection tape corresponds to the second cutting unit; and
the second cutting unit is configured to cut off the connection tape in response to the connection tape being clamped by the second winding station.

13. A cell winding method, applied in the cell winding device according to any one of claims 1 to 12, the method comprising:
performing cutting on the electrode sheet;
connecting, through the connection tape, adjacent electrode sheets that have been subject to the cutting;
performing winding on the adjacent electrode sheets connected through the connection tape, and aligning the connection tape to a cutting position subsequent to a completion of the winding; and
performing cutting on the connection tape.

14. The cell winding method according to claim 13, wherein said performing the cutting on the electrode sheet comprises:
moving the electrode sheet to a cutter, and performing the cutting on the electrode sheet by the cutter; and
moving electrode sheets that have been subject to the cutting, in such a manner that the electrode sheets that have been subject to the cutting are spaced apart from each other by a predetermined distance.

15. The cell winding method according to claim 14, wherein said connecting, through the connection tape, the adjacent electrode sheets that have been subject to the cutting comprises:
clamping, by an electrode sheet clamping plate, the electrode sheets that have been subject to the cutting;
moving an adhesive sticking wheel to the electrode sheet clamping plate, and disposing the connection tape at a surface of the adhesive sticking wheel;
connecting an end of the connection tape to an end of the electrode sheets that have been subject to the cutting, by an engagement between the adhesive sticking wheel and the electrode sheet clamping plate; and
driving, by the electrode sheet clamping plate, the electrode sheets that have been subject to the cutting to move, and rotating the adhesive sticking wheel along with a movement of the electrode sheet clamping plate, in such a manner that another end of the connection tape is connected to another end of the electrode sheets that have been subject to the cutting.

16. The cell winding method according to claim 15, wherein said disposing the connection tape at the surface of the adhesive sticking wheel comprises:
clamping, by an adhesive feeding finger, the connection tape, and moving the end of the connection tape to an adhesive preparation pressing mechanism, in such a manner that the end of the connection tape is tightly pressed against the surface of the adhesive sticking wheel by the adhesive preparation pressing mechanism;
releasing, by the adhesive feeding finger, the connection tape, and performing resetting; and
cutting off, by the adhesive tape cutter, the connection tape in response to the connection tape rotating by a predetermined distance under driving of the adhesive sticking wheel.

17. The cell winding method according to claim 14, wherein said connecting, through the connection tape, the adjacent electrode sheets that have been subject to the cutting comprises:
clamping, by an electrode sheet clamping plate, the electrode sheets that have been subject to the cutting;
moving an adhesive sticking pressing plate to the electrode sheet clamping plate, and sticking the connection tape to a surface of the adhesive sticking pressing plate; and
moving the adhesive sticking pressing plate to connect two ends of the connection tape to the electrode sheets that have been subject to the cutting, respectively.

18. The cell winding method according to claim 17, wherein said sticking the connection tape to the surface of the adhesive sticking pressing plate comprises:
clamping, by an adhesive feeding finger, the connection tape, and moving the connection tape to the adhesive sticking pressing plate; and
releasing, by the adhesive feeding finger, the connection tape in response to the connection tape being sticked to the adhesive sticking pressing plate, and cutting off, by an adhesive tape cutter, the connection tape.

19. The cell winding method according to any one of claims 13 to 18, wherein said performing cutting on the connection tape comprises:
moving a second winding station subsequent to a completion of winding by the first winding station; and
cutting off, by a cutting unit, the connection tape, after the connection tape is clamped by the second winding station.

20. The cell winding method according to claim 19, further comprising:
performing cell winding by the second winding station.
